(19) Europäisches Patentamt
European Patent Office
Office européen des brevets

(11) Publication number: **0 253 404 B1**

(12) **EUROPEAN PATENT SPECIFICATION**

(45) Date of publication of patent specification: **11.08.93**

(51) Int. Cl.5: **C08L 63/00**, C08G 59/22, C08G 59/18, C08G 59/14, C08G 59/16, C09D 5/44

(21) Application number: **87110374.3**

(22) Date of filing: **17.07.87**

The file contains technical information submitted after the application was filed and not included in this specification

(54) **Controlled film build epoxy coatings applied by cathodic electrodeposition.**

(30) Priority: **18.07.86 US 887850**
**02.07.87 US 69475**

(43) Date of publication of application:
**20.01.88 Bulletin 88/03**

(45) Publication of the grant of the patent:
**11.08.93 Bulletin 93/32**

(84) Designated Contracting States:
**AT BE CH DE ES FR GB IT LI LU NL SE**

(56) References cited:
**GB-A- 1 527 258**
**GB-A- 2 001 324**
**GB-A- 2 167 071**
**US-A- 4 315 044**
**US-A- 4 339 369**
**US-A- 4 417 033**
**US-A- 4 507 461**
**US-A- 4 608 405**

(73) Proprietor: **THE DOW CHEMICAL COMPANY**
**2030 Dow Center Abbott Road P.O. Box 1967**
**Midland Michigan 48640-1967(US)**

(72) Inventor: **Mc Intyre, J.M.**
**319 Petunia**
**Lake Jackson Texas 77566(US)**
Inventor: **Hickner, Richard A.**
**334 Linden Lane**
**Lake Jackson Texas 77566(US)**
Inventor: **Rao, Nancy A.**
**114 Daffodil**
**Lake Jackson Texas 77566(US)**

(74) Representative: **Casalonga, Axel et al**
**BUREAU D.A. CASALONGA - JOSSE Morassistrasse 8**
**W-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 253 404 B1

## Description

The invention is concerned with the preparation of coating compositions from epoxy-based resins and their application by cathodic electrodeposition.

Electrodeposition has become an important method for the application of coatings over the last two decades and continues to grow in popularity because of its efficiency, uniformity and environmental acceptance. Cathodic electrodeposition has become dominant in areas where highly corrosion-resistant coatings are required, such as in primers for automobile bodies and parts. Epoxy based systems provide the best overall preformance in this application and are widely used.

Cathodic electrodeposition resins based on conventional epoxies obtained by reacting liquid diglycidyl ethers of bisphenol A with bisphenol A to produce higher molecular weight epoxy resins have known disadvantages. Such products tend to have excessively high softening points resulting in poor flow out. In addition, such products require excessive amounts of solvent during their preparation. In order to improve flow, it has been proposed to modify such conventional epoxy resins by reactions with a diol in the presence of a tertiary amine catalyst. Thus, Bosso et al., US-A-3,839,252, describes modification with polypropylene glycol. Marchetti et al., US-A-3,947,339, teaches modification with polyesterdiols or polytetramethylene glycols. Wismer et al., US-A-4,419,467, describes still another modification with diols derived from cyclic polyols reacted with ethylene oxide. These various modifications, however, also have disadvantages. Tertiary amines or strong bases are required to effect the reaction between the primary alcohols and the epoxy groups involved. Furthermore, these reactions require long reaction times and are subject to gellation because of competitive polymerization of the epoxy groups by the base catalyst. In addition epoxy resins containing low levels of chlorine are required to prevent deactivation of this catalyst.

Many coating formulations applied by electrodeposition include pigments to provide color, opacity, application, or film properties. US-A-3,936,405, Sturni et al., describes pigment grinding vehicles especially useful in preparing stable, aqueous pigment dispersions for water-dispesible coating systems, particularly for application by electrodeposition. The final electrodepositable compositions, as described, contain the pigment dispersion and an ammonium or amine salt group solubilized cationic electrodepositable epoxy-containing vehicle resin and other ingredients typically used in electrodepositable compositions. Among the kinds of resins used are various polyepoxides such as polyglycidyl ethers of polyphenols, polyglycidyl ethers of polyhydric alcohols and polyepoxides having oxyalkylene groups in the epoxy molecule.

Moriarity et al., U.S.-A-4,432,850 disclose an aqueous dispersion of a blend of (A) an ungelled reaction product of a polyepoxide and a polyoxyalkylenepolyamine, which is then at least partially neutralized with acid to form cationic groups, and (B) an additional cationic resin different from (A). The resulting dispersion is applied by cathodic electrodeposition and is disclosed as providing high throw power and films which are better appearing, more flexible and more water-resistant.

Anderson et al. U.S.-A-4,575,523, disclose a film-forming resin composition which when combined with a crosslinking agent and solubilized, is capable of depositing high build coatings in cathodic electrodeposition processes. The resin is a reaction product of a modified epoxy formed by reacting a water-soluble or water-miscible polyol, an excess of polyamine, and an aliphatic monoepoxide.

The automobile industry still has needs in the areas of controlled film thickness. The ability to build thicker, uniform films which are smooth and free of defects will allow the elimination of an intermediate layer of paint known as a primer surface or spray primer, previously required to yield a sufficiently smooth surface for the topcoat. Such an elimination results in removal of one paint cycle and provides more efficient operations. Thicker electrocoat primers may also provide improved corrosion resistance.

The present invention is directed to a blend of two epoxy cationic resins comprising

I. 10 to 90 weight percent of an advanced epoxy cationic resin prepared by forming an advanced epoxy resin having terminal oxirane groups and subsequently converting at least part of the terminal oxirane groups of the advanced epoxy resin to cationic groups by reacting the resin with a nucleophilic compound for forming a cationic site in the molecule and adding an organic acid and water simultaneously with or subsequently to addition of the nucleophile whereby the advanced epoxy cationic resin has a charge density of from 0.2 to 0.6 milliequivalent of cationic charge per gram of resin and the advanced epoxy resin is prepared by reacting in the presence of a suitable catalyst

(A) 60 to 90 weight percent of glycidyl ethers comprising:

(A-1) at least one diglycidylether of a diol which is a diglycidyl ether of a polyetherdiol, a diglycidyl ether of an aliphatic diol essentially free of ether oxygen atoms or a diglycidyl ether of an oxyalkylated diol, and

(A-2) a diglycidylether of a dihydric phenol, with

(B) 10 to 40 weight percent of a dihydric phenol, and optionally

(C) a monofunctional capping agent,

wherein (A-1) and (A-2) are employed in such quantities that 20 to 100 weight percent of the glycidyl ethers (A) are contributed by component (A-1) and from zero to 80 weight percent of the glycidyl ethers are contributed by component (A-2), and components (A) and (B) are employed in such quantities that the resultant epoxide equivalent weight is from 350 to 10,000, and

II. 90 to 10 weight percent of a different epoxy-based cathodic electrodeposition resin, whereby

resin II is not an advanced epoxy cationic resin composition prepared by forming an advanced epoxy resin having terminal oxirane groups and subsequently converting at least part of the terminal oxirane groups of the advanced epoxy resin to cationic groups by reacting the resin with a nucleophilic compound for forming a cationic site in the molecule and adding an organic acid and water simultaneously with or subsequently to addition of the nucleophile whereby the advanced epoxy cationic resin composition has a charge density of from 0.2 to 0.6 milliequivalent of cationic charge per gram of resin and whereby the advanced epoxy resin is prepared by reacting in the presence of a suitable catalyst

60 to 90 weight percent of glycidyl ethers (A) comprising:

(A-1) at least one diglycidylether of a diol which is a diglycidyl ether of a polyetherdiol, a diglycidyl ether of an aliphatic diol essentially free of ether oxygen atoms or a diglycidyl ether of an oxyalkylated diol, and

(A-2) a diglycidylether of a dihydric phenol, with

40 to 10 weight percent of a dihydric phenol (B),

wherein (A-1) and (A-2) are employed in such quantities that 10 to 75 weight percent of the glycidyl ethers (A) are contributed by component (A-1) and from 25 weight percent to 90 weight percent of the glycidyl ethers are contributed by component (A-2), and components (A) and (B) are employed in such quantities that the resultant epoxide equivalent weight is from 350 to 10,000.

The present invention is also directed to a process for preparation of an advanced epoxy cationic resin from an epoxy resin composition having terminal oxirane groups which includes the step of converting oxirane groups to cationic groups by reacting a nucleophilic compound with at least some of the oxirane groups of the epoxy resin composition wherein an organic acid and water are added during some part of this conversion characterized by using as the epoxy resin composition a blend of two epoxy cationic resins comprising

I. 10 to 90 weight percent of an advanced epoxy cationic resin prepared by forming an advanced epoxy resin having terminal oxirane groups and subsequently converting at least part of the terminal oxirane groups of the advanced epoxy resin to cationic groups by reacting the resin with a nucleophilic compound for forming a cationic site in the molecule and adding an organic acid and water simultaneously with or subsequently to addition of the nucleophile whereby the advanced epoxy cationic resin has a charge density of from 0.2 to 0.6 milliequivalent of cationic charge per gram of resin and the advanced epoxy resin is prepared by reacting in the presence of a suitable catalyst

(A) 60 to 90 weight percent of glycidyl ethers comprising:

(A-1) at least one diglycidylether of a diol which is a diglycidyl ether of a polyetherdiol, a diglycidyl ether of an aliphatic diol essentially free of ether oxygen atoms or a diglycidyl ether of an oxyalkylated diol, and

(A-2) a diglycidylether of a dihydric phenol, with

(B) 10 to 40 weight percent of a dihydric phenol, and optionally

(C) a monofunctional capping agent,

wherein (A-1) and (A-2) are employed in such quantities that 20 to 100 weight percent of the glycidyl ethers (A) are contributed by component (A-1) and from zero to 80 weight percent of the glycidyl ethers are contributed by component (A-2), and components (A) and (B) are employed in such quantities that the resultant epoxide equivalent weight is from 350 to 10,000, and

II. 90 to 10 weight percent of a different epoxy-based cathodic electrodeposition resin, whereby

resin II is not an advanced epoxy cationic resin composition prepared by forming an advanced epoxy resin having terminal oxirane groups and subsequently converting at least part of the terminal oxirane groups of the advanced epoxy resin to cationic groups by reacting the resin with a nucleophilic compound for forming a cationic site in the molecule and adding an organic acid and water simultaneously with or subsequently to addition of the nucleophile whereby the advanced epoxy cationic resin composition has a charge density of from 0.2 to 0.6 milliequivalent of cationic charge per gram of resin and whereby the advanced epoxy resin is prepared by reacting in the presence of a suitable catalyst

60 to 90 weight percent of glycidyl ethers (A) comprising:

(A-1) at least one diglycidylether of a diol which is a diglycidyl ether of a polyetherdiol, a diglycidyl ether of an aliphatic diol essentially free of ether oxygen atoms or a diglycidyl ether of an

oxyalkylated diol, and

(A-2) a diglycidylether of a dihydric phenol, with

40 to 10 weight percent of a dihydric phenol (B),

wherein (A-1) and (A-2) are employed in such quantities that 10 to 75 weight percent of the glycidyl ethers (A) are contributed by component (A-1) and from 25 weight percent to 90 weight percent of the glycidyl ethers are contributed by component (A-2), and components (A) and (B) are employed in such quantities that the resultant epoxide equivalent weight is from 350 to 10,000.

The present invention is also directed to a coating composition comprising an aqueous dispersion of a mixture of the above-described advanced epoxy cationic resin with a different epoxy-based cationic resin and a method for coating such compositions.

Unexpectedly, incorporation of resins containing the advanced glycidyl ethers of diols into the blends confer to cathodically electrodepositable coating compositions produced therefrom the ability to build thicker films having controlled thickness during the electrodeposition process, as compared to a similar composition using an epoxy resin not containing the diol/glycidyl ether component. The ability to deposit thicker films is highly desirable for reducing the number of paint applications required while improving the corrosion resistance and appearance of the electrodeposited coating. The film thickness can be controlled by adjusting the amount of the diglycidylether of diol incorporated into the epoxy resin. Generally, thickness increases with increasing content of this component.

Another advantage is that the blends of cationic epoxy resins containing the diglycidylether of a diol have a lower viscosity at a given temperature than unmodified cationic resins of the same molecular weight. This lower viscosity allows the use of higher molecular weight resins and/or less solvent to achieve a viscosity comparable to an unmodified resin. The lower viscosity cationic resins allow the coating composition greater flowout during deposition and curing which results in better appearance. Alternatively, the lower viscosity cationic resins enable curing at lower temperatures to give equivalent flow and appearance. Finally, coatings produced using these epoxy resins have greater flexibility due to incorporation of the diglycidylether of a diol component as compared to those based on similar resins not containing that component.

All or the coating compositions of the invention provide useful cathodically electrodepositable coatings having improved flowout, film build, and flexibility properties due to the incorporation of the resin containing the diglycidyl ether of a diol as a component of the blend.

The advantages of the present invention are provided by a blend of a selected advanced epoxy cationic resin with a different epoxy-based cathodic electrodeposition resin.

The starting epoxy resin component for preparing the advanced epoxy cationic resin required for the mixture of resins of this invention is an advanced resin prepared by reacting a composition comprising a glycidyl ether of a diol (A-1) and optionally a glycidyl ether of a dihydric phenol (A-2) with a dihydric phenol (B) and optionally, a monohydric capping agent (C). Glycidyl ethers of dihydric phenols useful for the preparation of these resins are those having at least one, and preferably an average of two, vicinal epoxide groups per molecule. These polyepoxides can be produced by condensation of an epihalohydrin with a polyphenol in the presence of a basic acting substance.

Useful glycidyl ethers of dihydric phenols are represented by Formulae I and II:

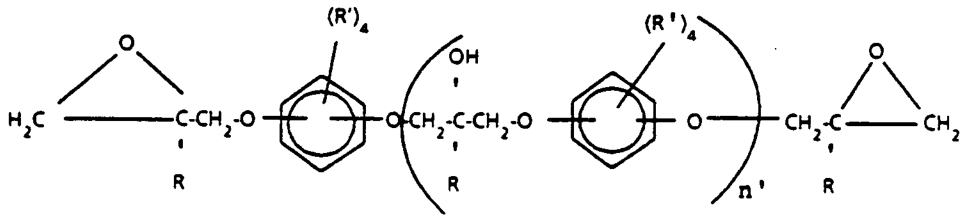

(I)

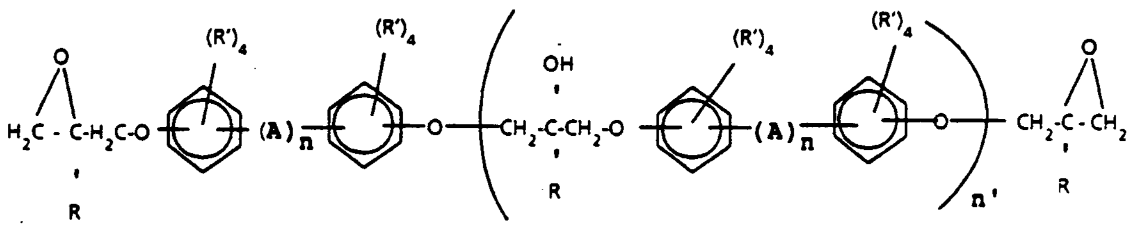

(II)

wherein A is a divalent hydrocarbon group having from 1 to 12, preferably 1 to 6, carbon atoms;

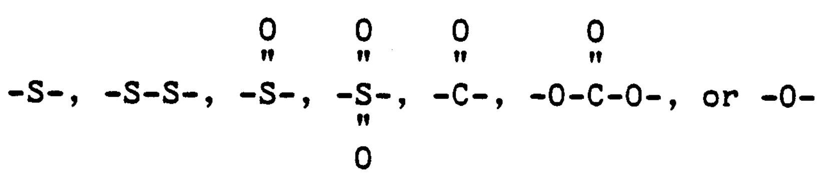

each R' is independently hydrogen, a hydrocarbyl or hydrocarbyloxy group having from 1 to 4 carbon atoms, or a halogen, preferably chlorine or bromine; each R is independently hydrogen or a hydrocarbyl group having from 1 to 3 carbon atoms; n has a value from zero to 1; and n' has a value from zero to 10, preferably from zero to 5, most preferably from 0.1 to 5.

Dihydric phenols useful for the production of these polyepoxides include 2,2-bis(4-hydroxyphenyl)-propane (bisphenol A), 1,1-bis(4-hydroxyphenyl)ethane, bis(4-hydroxyphenyl)methane (bisphenol F), p,p'-dihydroxybiphenyl, resorcinol, hydroquinone, or the like. The particularly preferred polyglycidyl ethers of polyphenols are the diglycidyl ether of bisphenol A and the oligomeric polyglycidyl ethers of bisphenol A.

The diglycidyl ethers of diols useful in the preparation of the cationic, advanced epoxy resin of the present invention are represented by the following structural formula:

(III)

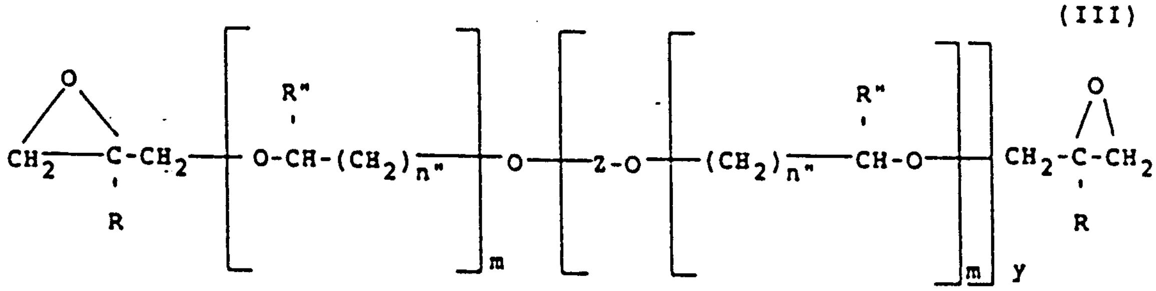

wherein R is as hereinbefore defined; R" is hydrogen or an alkyl group having from 1 to 6 preferably from 1 to 4 carbon atoms; n" has a value of 1 to 3, m is an integer from 0 to 50, preferably from 0 to 20, most preferably from 0 to 10; y is 0 or 1; and Z is a divalent aliphatic or cycloaliphatic group having from 2 to 20, preferably from 2 to 12, carbon atoms or one of the groups represented by the following formulas

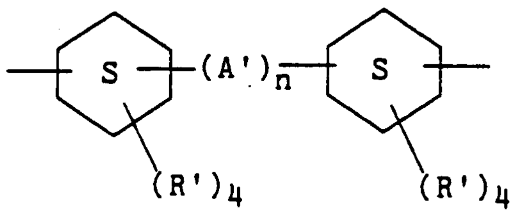
,

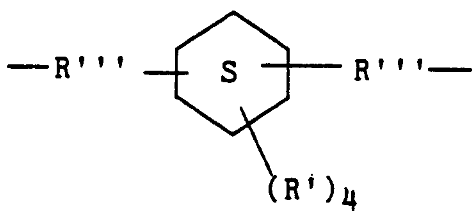
,

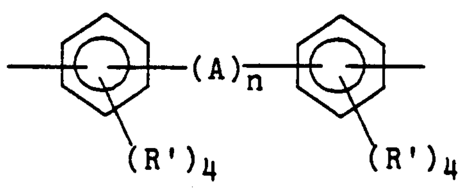
,

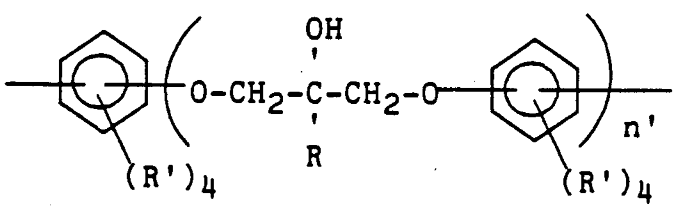
,

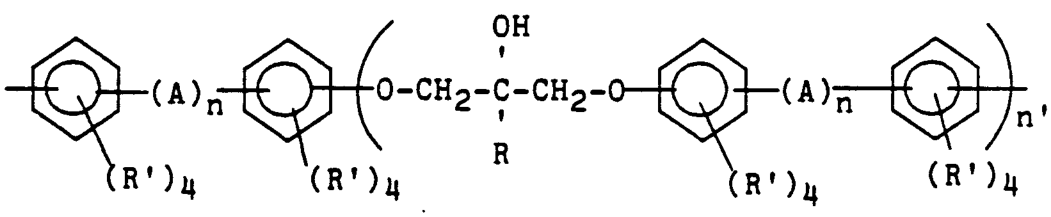
,

or

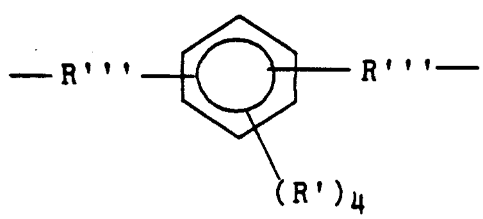

wherein A, R, R', R", n and n' are defined as hereinbefore and A' or R''' is a divalent hydrocarbon group having from 1 to 6 carbon atoms.

The glycidyl ethers of the diols are produced by the condensation of an epihalohydrin with a diol having the following structure:

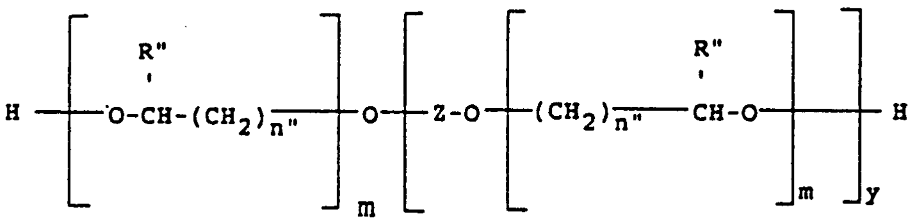

(IV)

wherein R", Z, m, y and n" are defined as hereinbefore. The resulting halohydrin product is then dehydrohalogenated by known methods with a basic acting substance, such as sodium hydroxide to produce the corresponding diglycidyl ether.

The diglycidyl ethers of diols of Formula III include diglycidyl ethers of polyetherdiols, diglycidyl ethers of aliphathic diols essentially free of ether oxygen atoms and diglycidyl ethers of oxyalkylated diols.

The diglycidyl ethers of polyetherdiols contemplated by Formula III are those having the structure:

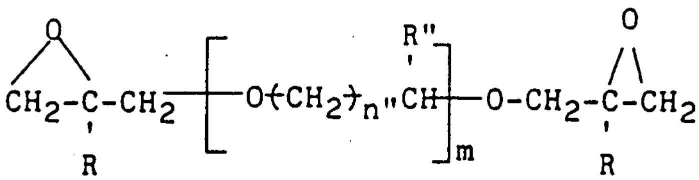

(V)

wherein R is defined as hereinbefore, R" is hydrogen or an alkyl group having from 1 to 6 carbon atoms, n" has a value of 1 to 3 and m is a number having an average from 2 to 50.

The glycidyl ethers of polyetherdiols of Formula V are produced by the condensation of an epihalohydrin with a polyetherdiol having the structure:

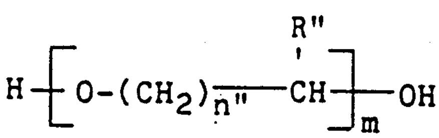

VI

where R", n" and m are defined as hereinbefore.

The polyetherdiols may be produced by the polymerization of the appropriate alkylene oxide or of mixtures of various alkylene oxides to produce a chain having the desired R" groups distributed among the units. Examples of useful polyetherdiols are diethylene glycol, triethylene glycol, poly(ethylene glycol), dipropylene glycol, tripropylene glycol, poly(propylene glycol), di-1,2-butylene glycol, poly(1,2-butyleneoxide) and poly(1,4-butanediol). The particularly preferred polyetherdiols from which the diglycidyl ethers are derived are dipropylene glycol and poly(propylene glycol) in which the average value of m is between 5 and 20.

The diglycidyl ethers of aliphatic diols essentially free of ether oxygen atoms contemplated by Formula III are those having the structure:

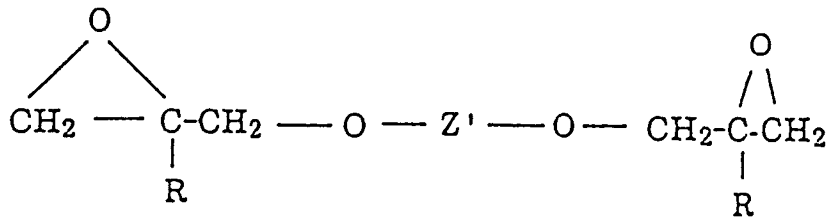

(VII)

wherein each R is independently hydrogen or a hydrocarbyl group having from 1 to 3 carbon atoms; Z' is a divalent aliphatic or cycloaliphatic group essentially free of ether oxygen atoms and having from 2 to 20, preferably from 2 to 12, carbon atoms or one of the groups represented by the formulas

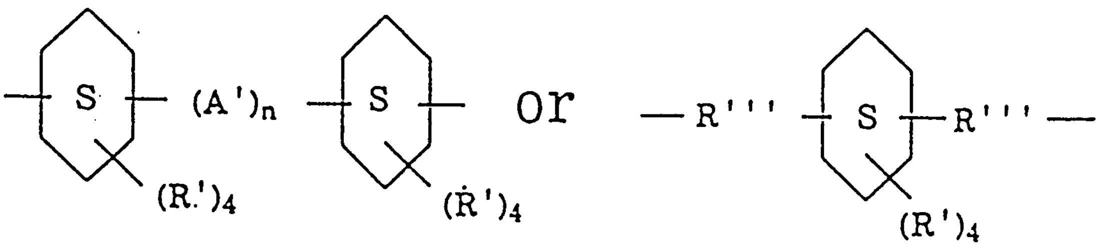

wherein A' and R''' is a divalent hydrocarbon group having from 1 to 6 carbon atoms, preferably from 1 to 4 carbon atoms; each R' is independently hydrogen or a hydrocarbyl group having from 1 to 4 carbon atoms; and n is defined as hereinbefore. Examples of useful aliphatic diols which are essentially free of ether oxygen atoms are 1,4-butanediol, 1,6-hexanediol, 1,12-dodecanediol, neopentylglycol, dibromoneopentyl glycol, 1,3-cyclohexanediol, hydrogenated bisphenol A, 1,4-cyclohexanedimethanol, 1,2-cyclohexanediol, 1,4-cyclohexanediol, and combinations thereof.
The glycidyl ethers of aliphatic diols which are essentially free of ether oxygen atoms of Formula VII can be produced by the condensation of an epihalohydrin with an aliphatic diol which is essentially free of ether oxygen atoms having the structure:

HO-Z'-OH (VIII)

where Z' is as defined above. The resultant halohydrin ether product is then dehydrohalogenated by known methods with a basic acting material such as sodium hydroxide.

The diglycidyl ethers of oxyalkylated diols contemplated by Formula III are those compounds having the structural formula:

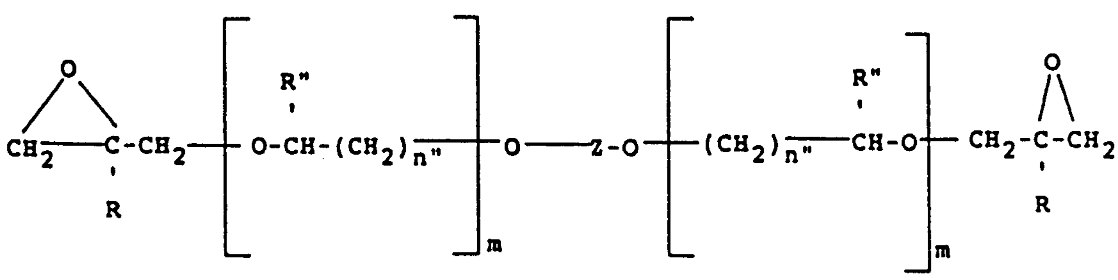

(IX)

wherein R, R" Z, n" are defined as hereinbefore, and m is an integer from 1 to 25, preferably from 1 to 15, most preferably from 1 to 5.

These glycidyl ethers of Formula IX are produced by the condensation of an epihalohydrin with an oxyalkylated diol having the structural formula:

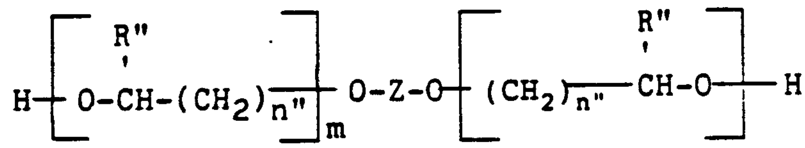 X

wherein Z, R", m and n" are defined as hereinbefore. The resultant halohydrin product is then dehydrohalogenated by known methods with a basic acting substance, such as sodium hydroxide, to produce the desired diglycidyl ether.

The oxylated diols are prepared by reacting a diol of the formula

HO-Z-OH (XI)

wherein Z is defined as hereinbefore, with the appropriate molar ratio of ethylene oxide, propylene oxide, butylene oxide, or mixtures thereof. Examples of useful diols include ethylene glycol, 1,4-butane diol, 1,6-hexanediol, neopentyl diol, 1,12-dodecanediol, 1,3-cyclohexanediol, 1,4-cyclohexanediol, 1,4-cyclohexanedimethanol, hydrogenated bisphenol A, bisphenol A, bisphenol F, hydroquinone, dihydroxydiphenyl oxide, p-xylenol and bisphenol capped epoxy resin.

Some of the common methods of synthesis of the diglycidylethers of polyetherdiols or aliphatic diols which are essentially free of ether oxygen atoms produce significant amounts of organic chloride-containing impurities. However, other processes are known for preparing products with lower levels of such impurities. While the low-chloride resins are not required for the practice of this invention, they may be used, if desired, for possible improvements in the process of preparing the resins, in the storage properties of the resins or formulated coatings made therefrom or in the performance properties of the products.

Mixtures containing the above two glycidyl ether components are reacted with a dihydric phenol and, optionally, a capping agent to produce epoxy-functional resins having the desired epoxide (oxirane) group content which are used to prepare the resins of the invention. The effective proportions of the diglycidyl ether components range from 20 to 100 weight percent of the diglycidylether of a diol (A-1) and from zero to 80 weight percent of the diglycidyl ether of a dihydric phenol (A-2). A preferred range is from 30 to 100 weight percent of the diglycidylether of a diol and correspondingly from zero to 70 weight percent of the diglycidyl ether of a dihydric phenol. The proportions of the glycidyl ether components (A = A-1 + A-2) and the dihydric phenol (B) are selected to provide an average epoxy equivalent weight in the advanced epoxy resin of from 350 to 10,000, preferably from 600 to 3,000. Such proportions usually are in the range of from 60 to 90 weight percent of component A and from 10 to 40 weight percent of component B. Useful diphenolic compounds include those described above as suitable for production of polyepoxide. The preferred diphenol is bisphenol A. Also useful are the bisphenols produced by chain extension of the diglycidyl ether of a bisphenol with a molar excess of bisphenol to produce a diphenolic functional oligomeric product.

The use of capping agents such as monofunctional phenolic compounds provides the advantageous ability to reduce the epoxide content of the resulting product without chain-extension reactions and thus allows independent control of the average molecular weight and the epoxide content of the resulting resin within certain limits. Use of a monofunctional compound to terminate a certain portion of the resin chain ends also reduces the average epoxy functionality of the reaction product. The monofunctional phenolic compound is typically used at levels of zero to 0.7 equivalent of phenolic hydroxyl groups per equivalent of epoxy which would remain after reaction of substantially all of the phenolic groups of the diphenol.

Examples of useful monofunctional capping agents are monofunctional phenolic compounds such as phenol, tertiary-butyl phenol, cresol, para-nonyl phenol, higher alkyl substituted phenols, and the like. Particularly preferred is para-nonyl phenol. The total number of phenolic groups and the ratio of difunctional to monofunctional phenolic compounds, if any are used, are chosen so that there will be a stoichiometric excess of epoxide groups. Ratios are also chosen so that the resulting product will contain the desired concentration of terminal epoxy groups and the desired concentration of resin chain ends terminated by the monophenolic compound after substantially all of the phenolic groups are consumed by reaction with epoxy groups. Usually, the amount of the capping agent is from about 1 percent to 15 percent based on the total weight of the A and B components.

These amounts are dependent on the respective equivalent weights of the reactants and the relative amounts of the epoxy-functional components and may be calculated by methods known in the art. In the practice of this invention, the desired epoxide content of the reaction product useful for preparation of the

cationic resin is typically between 1 and 5 percent, calculated as the weight percentage of oxirane groups, and preferably is from 2 to 4 percent. These levels are preferred because they provide, after conversion, the desired cationic charge density in the resinous products useful in cathodic electrodeposition. These cationic resins are produced by conversion of part or all of the epoxy groups to cationic groups as described below.

Reaction of the monofunctional compound with epoxy groups of the polyglycidylether components of the reaction mixture may be done prior to, substantially simultaneously with, or subsequent to the chain-extension reactions of the diphenolic compound and the polyglycidylether components. The preferred method is to have all of the reactants present simultaneously.

Reactions of the above components to produce the epoxy resins are typically conducted by mixing the components and heating, usually in the presence of a suitable catalyst, to temperatures between 130° and 225°C, preferably between 150°C and 200°C, until the desired expoxide content of the product is reached. The reaction optionally may be conducted in an appropriate solvent to reduce the viscosity, facilitate mixing and handling, and assist in controlling the heat of reaction.

Many useful catalysts for the desired reactions are known in the art. Examples of suitable catalysts include ethyltriphenylphosphonium acetate•acetic acid complex, ethyltriphenylphosphonium chloride, bromide, iodide, or phosphate, and tetrabutylphosphonium acetate. The catalysts are typically used at levels of 0.01 to 0.5 mole percent of the epoxide groups.

Appropriate solvents include aromatic solvents, glycol ethers, glycol ether esters, high boiling esters or ketones, or mixtures. Other useful solvents will be apparent to those skilled in the art. Preferred solvents are ethylene glycol monobutylether and propylene glycol monophenylether. Solvent content may range from zero to 30 percent of the reaction mixture. A solvent is usually chosen which is compatible with the subsequent cation-forming reactions and with the final coating composition so that the solvent does not require subsequent removal.

The nucleophilic compounds which are used advantageously in forming the cations required by this invention are represented by the following classes of compounds, sometimes called Lewis bases:

(a) monobasic heteroaromatic nitrogen compounds,

(b) tetra (lower alkyl)thioureas,

(c) $R_1$-S-$R_2$ wherein $R_1$ and $R_2$ individually are lower alkyl, hydroxy lower alkyl or are combined as one alkylene radical having 3 to 5 carbon atoms,

(d)

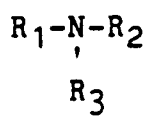

wherein $R_2$ and $R_3$ individually are lower alkyl, hydroxy lower alkyl,

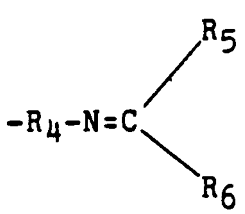

,

or are combined as one alkylene radical having from 3 to 5 carbon atoms, $R_4$ is an alkylene group having from 2 to 10 carbon atoms, $R_5$ and $R_6$ individually are lower alkyl and $R_1$ is hydrogen or lower alkyl, aralkyl or aryl, except that when $R_2$ and $R_3$ together are an alkylene group then $R_1$ is hydrogen, lower alkyl or hydroxyalkyl and when either or both of $R_2$ and $R_3$ is

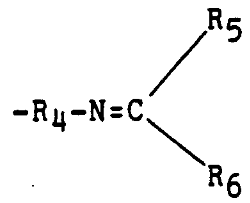 ,

then $R_1$ is hydrogen,

(e)

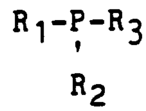 .

wherein $R_1$, $R_2$ and $R_3$ individually are lower alkyl, hydroxy lower alkyl or aryl.

In this specification the term lower alkyl means an alkyl having from 1 to 6 carbon atoms such as methyl, ethyl, propyl, isopropyl, n-butyl, isobutyl, n-pentyl, isopentyl, n-hexyl and isohexyl or branch chain isomers thereof.

Representative specific nucleophilic compounds are pyridine, nicotinamide, quinoline, isoquinoline, tetramethyl thiourea, tetraethyl thiourea, hydroxyethylmethyl sulfide, hydroxyethylethyl sulfide, dimethyl sulfide, diethyl sulfide, di-n-propyl sulfide, methyl-n-propyl sulfide, methylbutyl sulfide, dibutyl sulfide, dihydroxyethyl sulfide, bis-hydroxybutyl sulfide, trimethylene sulfide, thiacyclohexane, tetrahydrothiophene, dimethyl amine, diethyl amine, dibutyl amine, 2-(methylamino)ethanol, diethanolamine and the ketimine derivatives of polyamines containing secondary and primary amino groups such as those produced by the reaction of diethylene triamine or N-aminoethylpiperazine with acetone, methyl ethyl ketone or methylisobutyl ketone; N-methylpiperidine, N-ethylpyrrolidine, N-hydroxyethylpyrrolidine, trimethylphosphine, triethylphosphine, tri-n-butylphosphine, trimethylamine, triethylamine, tri-n-propylamine, triisobutylamine, hydroxyethyl 1-dimethylamine, butyldimethylamine, tri-hydroxyethylamine, triphenylphosphorus, and N,N,N-dimethylphenethylamine.

Substantially any organic acid, especially a carboxylic acid, can be used in the conversion reaction to form onium salts so long as the acid is sufficiently strong to promote the reaction between the nucleophilic compound and the vicinal epoxide group(s) on the resinous reactant. In the case of the salts formed by addition of of acid to secondary amine/epoxy resin reaction product, the acid should be sufficiently strong to protonate the resultant tertiary amine product to the extent desired.

Monobasic acids are normally preferred ($H^{\oplus}A^{\ominus}$). Suitable organic acids include, for example, alkanoic acids having from 1 to 4 carbon atoms (e.g., acetic acid, propionic acid,), alkenoic acids having up to 5 carbon atoms (e.g., acrylic acid, methacrylic acid,) hydroxy-functional carboxylic acids (e.g., glycolic acid, lactic acid,) and organic sulfonic acids (e.g., methanesulfonic acid). Presently preferred acids are lower alkanoic acids of 1 to 4 carbon atoms with lactic acid and acetic acid being most preferred. The anion can be exchanged, of course, by conventional anion exchange techniques. See, for example, U.S.-A-3,959,106 at column 19. Suitable anions are chloride, bromide bisulfate, bicarbonate, nitrate, dihydrogen phosphate, lactate and alkanoates of 1-4 carbon atoms. Acetate and lactate are the most preferred anions.

The conversion reaction to form cationic resins is normally conducted by merely blending the reactants together and maintaining the reaction mixture at an elevated temperature until the reaction is complete or substantially complete. The progress of the reaction is easily monitored. The reaction is normally conducted with stirring and is normally conducted under an atomsphere of inert gas (e.g., nitrogen). Satisfactory reaction rates occur at temperatures of from 25 °C to 100 °C, with preferred reaction rates being observed at temperatures from 60 ° to 80 °C.

Good results can be achieved by using substantially stoichiometric amounts of reactants although a slight excess or deficiency of the epoxy-containing resin or the nucleophilic compound can be used. With weak acids, useful ratios of the reactants range from 0.5 to 1.0 equivalent of nucleophilic compound per epoxide group of the resin and 0.6 to 1.1 equivalents or organic acid per epoxide. These ratios, when

combined with the preferred epoxide content resins described above, provide the desired range of cationic charge density required to produce a stable dispersion of the coating composition in water. With still weaker acids (e.g., a carboxylic acid, such as acetic acid) a slight excess of acid is preferred to maximize the yield of onium salts. In preparing the compositions in which the cationic group being formed is an onium group, the acid should be present during the reaction of the nucleophilic compound and the epoxy group of the resin. When the nucleophilic compound is a secondary amine, the amine-epoxy reaction can be conducted first, followed by addition of the organic acid to form the salt and thus produce the cationic form of the resin.

For the onium-forming reactions, the amount of water that is also included in the reaction mixture can be varied to convenience so long as there is sufficient acid and water present to stabilize the cationic salt formed during the course of the reaction. Normally, it has been found preferable to include water in the reaction in amounts of from 5 to 30 moles per epoxy equivalent. When the nucleophile is a secondary amine, the water can be added before, during, or after the resin epoxy group/nucleophile reaction. The preferred range of charge density of the cationic, advanced epoxy resin is from 0.2 to 0.6 milliequivalent of charge per gram of the resin.

It has also been found advantageous to include minor amounts of water-compatible organic solvents in the reaction mixture. The presence of such solvents tends to facilitate contact of the reactants and thereby promote the reaction rate. In this sense, this particular reaction is not unlike many other chemical reactions and the use of such solvent modifiers is conventional. The skilled artisan will, therefore, be aware of which organic solvents can be included. One class of solvents that we have found particularly beneficial are the monoalkyl ethers of the $C_2$-$C_4$ alkylene glycols. This class of compounds includes, for example, the monomethyl ether of ethylene glycol, the monobutyl ether of ethylene glycol, etc. A variety of these alkyl ethers of alkylene glycols are commercially available.

When a desired degree of reaction is reached, any excess nucleophilic compound can be removed by standard methods, e.g., dialysis, vacuum stripping and steam distillation.

The Other Resin

The other resin which is blended with the advanced epoxy cationic resin containing the glycidylether of a diol component is broadly characterized as a different cationic cathodically electrodepositable resin. Preferred kinds of the different electrodepositable resins are epoxy-based resins, particularly those resins containing a reacted glycidyl ether of a dihydric phenol which has been advanced with a dihydric phenol such as bisphenol A. Examples of these different cathodically electrodepositable resins include resins like those described above except that they contain none, or less than the minimum amount, of the advanced glycidyl ether of a diol. Conventional epoxy resins obtained by reacting liquid diglycidyl ethers of bisphenol A with bisphenol A are among the more specific examples of the class of other resins which can be a portion of the blend.

Several kinds of epoxy-based resins which may be used in the blends are described in various patents as follows: Jerabek in U.S.-A-4,031,050 describes cationic electrodeposition resins which are the reaction products of an epoxy-based resin and primary or secondary amines. U.S.-A-4,017,438 to Jerabek et al. describes reaction products of epoxy-based resins and blocked primary amines. Bosso et al. describe in U.S.-A-3,962,165; 3,975,346; 4,001,101 and 4,101,486 cationic electrodeposition resins which are reaction products of an epoxy-based resin and tertiary amines. Bosso et al. in U.S.-A-3,959,106 and DeBona in U.S.-A-3,793,278 describe cationic electrodeposition resins which are epoxy-based resins having sulfonium salt groups. Wessling et al. in U.S.-A-4,383,073 describe cationic electrodeposition resins which are epoxy-based resins having carbamoylpyridinium salt groups. U.S.-A-4,419,467 to Bosso et al. discusses epoxy-based resins reacted with primary, secondary and tertiary amine groups as well as quarternary ammonium groups and ternary sulfonium groups. U.S-A-4,076,676 to Sommerfeld describes aqueous dispersions of epoxy-based cationic resins which are the reaction products of a terminally functional epoxy resin, a tertiary amine and a nitrogen resin. U.S.-A-4,134,864, to Belanger, describes reaction products of epoxy-based resins, polyamines and a capping agent. Still other suitable resins for use in the blends of this invention are described in the patents in the following list:

| United States Patent | Patentee |
|---|---|
| 4,182,831 | Hicks |
| 4,190,564 | Tominaga et al. |
| 4,296,010 | Tominaga |
| 4,335,028 | Ting et al. |
| 4,339,369 | Hicks et al. |

Preparing the Blends

The blends of the critical resin containing the advanced glycidyl ether of a diol and the other resin can be prepared in any one of several ways.

To prepare the desired product in an aqueous dispersion can involve the following steps:

1. preparing the non-cationic resin,
2. converting the non-cationic resin to a cationic resin,
3. converting the cationic resin to a water-in-oil dispersion of the resin, and
4. converting the water-in-oil dispersion to an oil-in-water dispersion.

The blending of the critical resin and the other resin can occur with the resins at the same stage after step 1, after step 2, after step 3 or after step 4. Thus resins of the two types may be blended (a) as non-cationic resins, (b) as cationic resins (c) as water-in-oil dispersions of the cationic resins or (d) as oil-in-water dispersions. Subsequent steps are then carried out on the blended mateial (except for (d)), to form the desired product as an aqueous dispersion. These aqueous dispersions may be treated further as desired according to the discussion below in other embodiments of this invention.

The blending of the resins generally involves only gentle mixing. When blending is done with the non-cationic resins or with the cationic resins which are not yet in aqueous dispersion, a solvent for the resins optionally may be used to facilitate the mixing.

The relative amounts of the critical resin and the other resin in the blend are such as to provide from 10 to 90 percent, preferably 20 percent to 80 percent of the critical resin, based on the total weight of cationic resin in the blend.

The blends of resins of this invention in the form of aqueous dispersions are useful as coating compositions, especially when applied by electrodeposition. The coating compositions containing the blends of this invention as the sole resinous component are useful but it is preferred to include crosslinking agents in the coating composition to facilitate curing so that the coated films will be crosslinked and exhibit improved film properites. The most useful sites on the resin for crosslinking reactions are the secondary hydroxy groups along the resin backbone. Materials suitable for use as crosslinking agents are those known to react with hydroxyl groups and include blocked polyisocyanates; amine-aldehyde resins such as melamine-formaldehyde, urea-formaldehyde, benzoguanine-formaldehyde, and their alkylated analogs; and phenol-aldehyde resins.

Particularly useful and preferred crosslinking agents are the blocked polyisocyanates which, at elevated temperatures, deblock and form isocyanate groups which react with the hydroxyl groups of the resin to crosslink the coating. Such crosslinkers are typically prepared by reaction of the polyisocyanate with a monofunctional active-hydrogen compound.

Examples of polyisocyanates suitable for preparation of the crosslinking agent are described in U.S.-A-3,959,106 to Bosso, et al., in Column 15, lines 1-24. Also suitable are isocyanates and polyols using excess isocyanate groups. Examples of suitable prepolymers are described by Bosso, et al., in U.S.-A-3,959,106, Column 15, lines 25-57. In the preparation of the prepolymers, reactant functionality, equivalent ratios, and methods of contacting the reactants must be chosen in accordance with considerations known in the art to provide ungelled products having the desired functionality and equivalent weight.

Examples of polyisocyanates are the isocyanurate trimer of hexamethylene diisocyanate, toluene diisocyanate, methylene diphenylene diisocyanate, isophorone diisocyanate, and a prepolymer from toluene diisocyanate and polypropylene glycol, dipropylene glycol, tripropylene glycol or a prepolymer of toluene diisocyanate and trimethylolpropane.

Suitable blocking agents include alcohols, phenols, oximes, lactams, and N,N-dialkylamides or esters of alpha-hydroxyl group containing carboxylic acids. Examples of suitable blocking agents are described in U.S.-A-3,959,106 to Bosso, et al., in Column 15, line 58, to Column 16, line 6, and in U.S.-A-4,452,930 to Moriarity. Particularly useful are the oximes of ketones, also known as ketoximes, due to their tendency to deblock at relatively lower temperatures and provide a coating composition which can be cured at

signficantly lower temperatures. The particularly preferred ketoxime is methyl ethyl ketoxime.

The cationic resins of the invention when formulated with certain preferred ketoxime-blocked polyisocyanates, provide coating compositions which cure at significantly lower temperatures than those of the prior art.

The blocked polyisocyanates are prepared by reacting equivalent amounts of the isocyanate and the blocking agent in an inert atmosphere such as nitrogen at temperatures betwen 25° to 100°C, preferably below 70°C to control the exothermic reaction. Sufficient blocking agent is used so that the product contains no residual, free isocyanate groups. A solvent compatible with the reactants, product, and the coating composition may be used such as a ketone or an ester. A catalyst may also be employed such as dibutyl tin dilaurate.

The blocked polyisocyanate crosslinking agents are incorporated into a coating composition at levels corresponding to from 0.2 to 2.0 blocked isocyanate groups per hydroxyl group of the cationic resin.

A catalyst optionally may be included in the coating composition to provide faster or more complete curing of the coating. Suitable catalysts for the various classes of crosslinking agents are known to those skilled in the art. For the coating compositions using the blocked polyisocyanates as crosslinking agents, suitable catalysts include dibutyl tin diluarate, dibutyl tin diacetate, dibutyl tin oxide, stannous octanoate, and other urethane-forming catalysts known in the art. The preferred catalyst is dibutyl tin dilaurate. Amounts used typically range between 0.1 and 3 weight percent of binder solids.

Unpigmented coating compositions are prepared by mixing the cationic resin blend with the crosslinking agent and optionally any additives such as catalysts, solvents, surfactants, flow modifiers, defoamers, or other additives. This mixture is then dispersed in water by any of the known methods. A particularly preferred method is the technique known as phase-inversion emulsification, wherein water is slowly added with agitation to the above mixture, usually at temperatures arranging from ambient to 90°C, until the phases invert to form an organic phase-in-water dispersion. The solids content to the aqueous dispersion is usually between 5 and 30 percent by weight and preferably between 10 and 25 percent by weight for application by electrodeposition.

Pigmented coating compositions are prepared by adding a concentrated dispersion of pigments and extenders to the unpigmented coating compositions. This pigment dispersion is prepared by grinding the pigments together with a suitable pigment grinding vehicle in a suitable mill as known in the art.

Pigments and extenders known in the art are suitable for use in these coatings including pigments which increase the corrosion resistance of the coatings. Examples of useful pigments or extenders include titanium dioxide, talc, clay, lead oxide, lead silicates, lead chromates, carbon black, strontium chromate, and barium sulfate.

Pigment grinding vehicles are known in the art. A preferred pigment grinding vehicle for use in this invention consists of a water-soluble cationic resinous product, water, and a minor amount of glycol ether solvent. The cationic resinous product is prepared by reacting an epichlorohydrin/bishphenol A condensation product having an epoxide group content of 8 percent with a nucleophilic compound, an acid, and water in a similar fashion as described above for the cationic resins used in the preferred embodiment of the invention. The water-soluble product may be diluted with water to form a clear solution useful as a pigment grinding vehicle.

The pH and/or conductivity of the coating compositions may be adjusted to desired levels by the addition of compatible acids, bases, and/or electrolytes known in the art. Other additives such as solvents, surfactants, defoamers, anti-oxidants, bactericides, etc. may also be added to modify or optimize properties of the compositions or the coating in accordance with practices known to those skilled in the art.

Although the coating compositions of the invention may be applied by any conventional technique for aqueous coatings, they are particularly useful for application by cathodic electrodeposition, wherein the article to be coated is immersed in the coating composition and made the cathode, with a suitable anode in contact with the coating composition. When sufficient voltage is applied, a film of the coating deposits on the cathode and adheres. Voltage may range from 10 to 1,000 volts, typically 50 to 500. The film thickness achieved generally increases with increasing voltage. In the case of the coating compositions of the invention, thicker films are achieved by incorporation of the diglycidyl ether of a diol into the epoxy resin used to produce the cationic resins of the invention. Also, control over the final thickness may be exercised by adjusting the amount of that component used. Current is allowed to flow for between a few seconds to several minutes, typically two minutes, over which time the current usually decreases. Any electrically conductive substrate may be coated in this fashion, especially metals such as steel and aluminum. Other aspects of the electrodeposition process, such as bath maintenance, are conventional. After deposition, the article is removed from the bath and typically rinsed with water to remove that coating composition which does not adhere.

The uncured coating film on the article is cured by heating at elevated temperatures, ranging from about 200° to 400°F (93°C to 204°C), for periods of 1 to 60 minutes.

Examples

In the following examples, various materials were used which are characterized as follows:

Epoxy Resin A is a condensation product of bisphenol A and epichlorohydrin having an epoxide equivalent weight of 187.

Epoxy Resin B is a condensation product of dipropylene glycol and epichlorohydrin having an epoxide equivalent weight of 185.

Epoxy Resin C is a condensation product of a diglycidylether of bisphenol A having an epoxide equivalent weight of 185 and bisphenol A, said condensation product having an epoxide equivalent weight of 1807.

Epoxy Resin D is a condensation product of a diglycidyl ether of bisphenol A having an epoxide equivalent weight of 185 and bisphenol A, said condensation product having an epoxide equivalent weight of 475 to 575.

Epoxy Resin E is the diglycidyl ether of 1,4-butanediol having an epoxide equivalent weight (EEW) of 125 available from Wilmington Chemical Corp. as HELOXY™ WC-67.

Epoxy Resin F is the diglycidyl ether of cyclohexanedimethanol having an (EEW) of 163 available from Wilmington Chemical Corp. as HELOXY™ MK-107.

Epoxy Resin G is the diglycidyl ether of neopentyl glycol having an EEW of 135 available from Wilmington Chemical Corporation as HELOXY™ WC-68.

ED 3002, marketed by PPG Industries, Inc., is a commercial cathodic electrodeposition primer containing an epoxy-based advanced resin and is herein described as a conventional electrodeposition primer.

Curing Agent A is a blocked polyisocyanate available from Mobay Chemical Company as Desmodur™ KL5-2540. The material is believed to be the reaction product of methyl ethyl ketoxime and a polyisocyanate which is substantially the isocyanurate trimer of hexamethylenediisocyanate. The product is supplied as a 75 percent solution of the blocked polyisocyanate in propylene glycol monomethylether acetate.

Curing Agent B was prepared as follows: To a solution of 174 parts of toluene diisocyanate and 102 parts of methoxy propyl acetate at 50°C is added dropwise 106 parts of polypropylene glycol (425 molecular weight). An exothermic reaction raises the temperature to 65°C and the mixture is allowed to cool to 55°C upon which 131 parts of methyl ethyl ketoxime is added dropwise. Cooling is applied due to an exothermic reaction reaching 75°C. Another 102 parts of methoxy propyl acetate is added and the mixture is heated at 70°C for 45 minutes longer. The temperature of the reaction mixture was allowed to rise to 50°C to 60°C during the addition. The reaction mixture was then cooled to ambient temperature over 2 hours. The infrared spectrum of the product showed no residual unreacted isocyanate groups. The product solution was approximately 68.9 percent non-volatile.

Curing Agent C was prepared as follows: 38.7 grams of 2-ethylhexanol was added slowly to 119.8 grams of a 60 percent solution of toluene diisocyanate-trimethylol propane prepolymer in a methoxy propyl acetate solvent to which had been added 0.073 gram of dibutyl tin dilaurate catalyst. The reaction was conducted in an agitated closed vessel under a dry nitrogen blanket with external temperature control to keep the reacting temperature under 60°C. After a few hours there was no detectable free isocyanate as determined by infrared spectrophotometric analysis.

Pigment Grinding Vehicle A was prepared by reacting, at 70°C, a mixture of 90 grams of Epoxy Resin D and 10 grams of an ethylene glycol butyl ether solvent with an aqueous solution containing 13.1 grams of nicotinamide, 12.2 grams of lactic acid, and 64.3 grams of water for 6 hours. Upon completion of the onium-forming reaction, 98.6 grams of water was added slowly while agitating continuously at 60°C. The pigment grinding vehicle had a solids content of 40 percent.

Pigment Paste A was prepared by mixing the following: 525 grams of Pigment Grinding Vehicle A (40 percent solids), 105 grams of carbon black, 210 grams of basic white lead silicate, 367.5 grams of titanium dioxide, 367.5 grams of ASP 200 clay and 131.3 grams of deionized water. Enough chrome-plated steel pellets (about 2 mm in diameter x 5 mm long) are added to comprise about one-third of the final bulk volume. These materials were mixed together by using a paint shaker. The pigment-to-vehicle ratio of the pigment paste was 5:1.

Pigment Grinding Vehicle B was prepared by the following procedure:

Into a 2-liter, round-bottomed flask fitted with a nitrogen inlet, thermometer, mechanical stirrer, and

condenser were charged 511.5 grams of Epoxy Resin A and 163.5 grams of bisphenol A. The mixture was stirred in a nitrogen atmosphere and heated to 90°C to form a clear mixture. A solution of 70 percent by weight of ethyltriphenyl-phosphonium acetate•acetic acid complex in methanol (0.89 grams) was added and the mixture heated to 150°C and allowed to exotherm. Peak exotherm temperature was controlled to below 185°C by cooling. The temperature was then maintained at 175°C until about 75 minutes past peak exotherm when an epoxide equivalent weight of 526 grams/equivalent was obtained.

To the above resin was added 75 grams of ethylene glycol butyl ether solvent at a temperature between 110° to 130°C. The resin solution was cooled to 80°C and an aqueous mixture consisting of 85.7 grams of N,N-dimethylethanolamine, 154.6 grams of an aqueous solution containing 71 percent of lactic acid and 288.9 grams deionized water was added over a period of 30 minutes to produce an opaque, whitish, viscous mixture. A reaction temperature of 80°C was maintained for 4 hours. This mixture was heated at 70°C for 10.5 hours longer to obtain a complete reaction. The product was diluted to 30 percent solids by the dropwise addition of deionized water at 60°C.

Pigment Paste B was prepared similarly to Pigment Paste A with the exception that Pigment Grinding Vehicle B is used. The pigment-to-vehicle ratio of the pigment paste was 5:1.

Pigment Paste C was prepared by mixing the following: Pigment Grinding Vehicle A, ASP 200 clay, lead silicate, carbon black, titanium dioxide, lead silicon chromate and water. These ingredients were mixed together and ground in a pigment grinding mill. The pigment-to-vehicle ratio of the pigment paste was 5:1.

## CURING AGENT E

To a 2-liter reactor is added 523.1 grams of toluene diisocyanate. While stirring under nitrogen, 390 grams of 2-ethylhexanol is added dropwise at a temperature between 22°C and 32°C. An ice bath is used to cool the reaction mixture. Upon completion of the addition, the ice bath is removed and the mixture is allowed to reach 32°C over a 30 minute period. This mixture is heated to 60°C and 206.1 grams of methyl isobutyl ketone is added at once. Then, 134.0 grams of trimethylolpropane is added over a ten minute period while heating the reaction mixture at 60°C. Then, 0.2 grams of dibutyl tin dilaurate is added and the reaction is allowed to exotherm to 95°C after which it is heated to 120°C over a 50 minute period. Heating at 120°C is continued for an additional 40 minutes. The reaction mixture is allowed to cool to 60°C and then diluted with 197.1 grams of methyl isobutyl ketone and 44.8 grams of butanol. The product contains 70 percent solids (non-volatiles). Infrared spectroscopy shows no unreacted isocyanate is present.

## PIGMENT GRINDING VEHICLE C

The pigment grinding vehicle is prepared by charging into a two-liter, round-bottom flask fitted with a nitrogen inlet, thermometer, mechanical stirrer and condenser 340.3 parts by weight (pbw) of Epoxy Resin A and 109.7 pbw of bisphenol A. The mixture is stirred under a nitrogen atmosphere and heated to 90C to form a clear mixture. A solution containing 70 percent by weight of ethyl triphenyl phosphonium acetateacetic acid complex in methanol (0.6 pbw) is added. The mixture is then heated to 150°C at a rate of 1°C to 2°C per minute and then allowed to exotherm to 170°C. The temperature is raised to 175°C and maintained for 30 minutes, at which time the epoxide content of the resin is 8.1 percent by weight. The resin is cooled to 130°C, diluted with 50.0 pbw of ethylene glycol monobutyl ether, and cooled to 65°C to give an epoxy resin solution. To 422 pbw of this epoxy resin solution is added 47.1 pbw of 2-(methylamino)-ethanol dropwise over a period of 22 minutes with cooling to maintain the temperature at 65°C to 74°C. The temperature is then maintained at 80°C for 3 hours. A solution (75.4 pbw) which contains 75 percent lactic acid is diluted with water (100 pbw) and then the resulting solution is added at 75°C to 80°C to the reaction mixture at 75°C to 80°C. Thereafter, dilution of the product with additional water (458.7 pbw) provides a cationic resin solution containing 40 percent non-volatiles.

## PIGMENT PASTE D

A concentrated pigment paste is prepared by placing a pigment blend (100 pbw) comprising 35 pbw of clay, 35 pbw of titanium dioxide, 20 pbw of lead silicate, and 10 pbw of carbon black in a metal paint can along with 50 pbw of Pigment Grinding Vehicle C. Enough chrome-plated steel pellets (about 2 mm in diameter x 5 mm long) are added to comprise about one-third of the final bulk volume. The pigments are ground and dispersed in the vehicle by placing the can on a paint shaker for 45 minutes. Water is then added and blended in to reduce the viscosity slightly and the grinding pellets are removed by filtration. The final pigment dispersion contains 55 percent pigment by weight.

PIGMENT PASTE E

Pigment Paste E is a pigment paste obtained from PPG Industries, Inc. designated Cationic Paste E 5410.

COATING AND TESTING THE COMPOSITIONS

The coating compositions are placed in a stainless steel tank, agitated, and maintained at 80°F (27°C). Unpolished steel test panels having Bonderite™ 40 treatment and P60 rinse available from Advanced Coatings Technologies, Inc. are immersed in the tank and connected as the cathode to a D.C. voltage source, with the tank walls serving as the anode. The desired voltage is applied for two minutes, then the panels are removed, rinsed with deionized water, and baked at the specified temperature for 30 minutes.

Example 1

A cationic electrodeposition resin was prepared as follows: Into a suitable reactor were charged 132 grams of Epoxy Resin B and 68 grams of bisphenol A. The mixture was heated to 90°C and 0.25 grams of ethyl triphenyl phosphonium acetate•acetic acid complex catalyst blended with 0.10 gram of methanol were added. This blend was stirred while heating at 1.5°C/min to 150°C whereupon it exothermed to 170°C where the temperature was held for about one hour. The epoxy equivalent weight (EEW) of the resulting resin was 1878. The resin was cooled to 120°C and 22.2 grams of a propylene glycol phenyl ether solvent was added. The resin solution was further cooled to 60°C (initial Epoxy Resin 1) and 8.0 grams of 2-(methylamino)ethanol was added whereupon it exothermed to 67°C and the temperature was controlled at 60°C for one hour.

To the reaction product at 60°C were added 4.86 grams of dibutyl tin dilaurate catalyst and 158.2 grams of Curing Agent C.

While agitating continuously, a cationic dispersion was prepared by adding to the resulting mixture, at 60°C, 13.5 grams of an aqueous solution containing 71 percent of lactic acid followed by the slow addition of 1741.4 grams of water (Resin Dispersion 1).

The cationic dispersion described above was blended with a commercial cathodic electrodeposition primer, ED 3002. Cationic electrodeposition baths were prepared by adding 10, 20, 30 and 40 weight percent of the above-descirbed dispersion to ED 3002.

Steel panels pretreated with zinc phosphate were cathodically electrocoated in the bath at 200, 250, and 300 volts for 2 minutes at a bath temperature of 82°F (27°C). The wet films were baked at 350°F (176°C) for 30 minutes. Film thicknesses are shown in Table I.

TABLE I

| Resin Dispersion 1 Percent | ED 3002 Percent | Film Thicknesses in µm (mils) | | |
|---|---|---|---|---|
| | | 200 volts | 250 volts | 300 volts |
| 0* | 100 | 11.43 (0.45) | 14.48 (0.57) | 16.26 (0.64) |
| 10 | 90 | 11.94 (0.47) | 14.99 (0.59) | 19.30 (0.76) |
| 20 | 80 | 13.72 (0.54) | 15.49 (0.61) | 22.10 (0.87) |
| 30 | 70 | 14.99 (0.59) | 19.30 (0.76) | 23.62 (0.93) |
| 40 | 60 | 18.03 (0.71) | 22.10 (0.87) | 25.91 (1.02) |

*Not an example of the invention.

This data shows that film thicknesses can be controlled by blending different proportions of the described critical cationic electrodeposition dispersion with a commercial cathodic electrodeposition paint and applying the resulting paint at a selected deposition voltage.

Example 2

A cationic electrodeposition resin was prepared as follows: Into a suitable reactor were charged 150 grams of Epoxy Resin C and 50 grams of an epoxy resin like initial Epoxy Resin 1, which had an epoxy

equivalent weight of 1,830. To this mixture was added 22.2 grams of propylene glycol phenyl ether solvent while heating at a temperature between 110° to 130°C. This mixture was then cooled to 80°C and 8.25 grams of 2-(methylamino)ethanol was added dropwise. This mixture was stirred at 80°C for one hour.

To the reaction product at 60°C was added 2.28 grams of dibutyl tin dilaurate catalyst and 152 grams of Curing Agent A. While agitating continuously, a cationic dispersion was prepared by adding to the resulting mixture, at 70°C, 11.25 grams of an aqueous solution containing 88 percent of lactic acid followed by the slow addition of 1,555 grams of deionized water. The pH of the resulting cationic dispersion was adjusted to 6.0 by the dropwise addition of N,N-diethylethanolamine. The product was an aqueous dispersion containing 18 percent solids of a blend of cationic resins (Resin Dispersion 2).

Steel panels, pretreated with zinc phosphate, were cathodically electrocoated with Resin Dispersion 2 in the bath at 200, 225, 250 and 275 volts for 2 minutes at a bath temperature of 82°F (27°C). The wet coatings were cured at 275°F (135°C) for 30 minutes. Film thicknesses were measured and are reported in Table II.

TABLE II

| Voltage | Film Thicknesses in µm (Mils) |
|---|---|
| 200 | 17.8 (0.7) |
| 225 | 27.9 (1.1) |
| 250 | 68.6 (2.7) |
| 275 | 76.2 (3.0) |

This data shows that a cationic electrodeposition paint can be prepared by mixing separately prepared advanced epoxy resins which are then reacted to form cationic resins.

Example 3

Into a 2-liter, round-bottomed flask fitted with a nitrogen inlet, thermometer, mechanical stirrer, and condenser were charged 725 grams of Epoxy Resin A, 355 grams bisphenol A, and 120 grams of 95 percent grade para-nonyl phenol. The mixture was stirred in a nitrogen atmosphere and heated to 90°C to form a clear mixture. A solution of 70 percent by weight of ethyltriphenylphosphonium acetate•acetic acid complex in methanol (0.77 grams) was added and the mixture heated to 150°C and allowed to exotherm. Peak exotherm temperature was controlled to below 185°C by cooling. The temperature was then maintained at 175°C until about 75 minutes past peak exotherm when the desired epoxide content was reached. The epoxide equivalent weight of the product was 1,822 (Epoxy Resin 3A).

The cationic resin was prepared as follows: To 296 grams of the resulting advanced resin at a temperature between 110° to 130°C was added 30.0 grams of propylene glycol monophenyl ether solvent. The resin solution was further cooled to 80°C and an aqueous mixture comprised of 14.9 grams nicotinamide, 15.7 grams of an aqueous solution containing 88 percent of lactic acid, and 72.9 grams of deionized water was added over a period of 30 minutes to produce an opaque, whitish, viscous mixture. A reaction temperature of 80°C was maintained for four hours. The product was a clear, light yellow, highly viscous solution (Cationic Resin 3A).

Into a 2-liter, round-bottomed flask fitted with a nitrogen inlet, thermometer, mechanical stirrer, and condenser, were charged 538 grams Epoxy Resin B, 272 grams bisphenol A, and 90.0 grams of 95 percent grade para-nonyl phenol. The mixture was stirred in a nitrogen atmosphere and heated to 90°C to form a clear mixture. A solution of 70 percent by weight of ethyltriphenylphosphonium acetate•acetic acid complex in methanol (1.57 grams) was added and the mixture was heated to 150°C and allowed to exotherm. Peak exotherm temperature was controlled to below 185°C by cooling. The temperature was then maintained at 175°C until about 75 minutes past peak exotherm when the desired epoxide content was reached. The epoxide equivalent weight of the product was 2,905 (Epoxy Resin 3B).

The resulting resin was converted to a cationic resin (Cationic Resin 3B) in the same manner as described for Cationic Resin 3A above.

To 180 grams of Cationic Resin 3A was added 60 grams of Cationic Resin 3B and this mixture was heated under nitrogen atmosphere at 75°C. While stirring continuously, a cationic dispersion was prepared by adding 132.2 grams of Curing Agent C and 1.82 grams of dibutyl tin dilaurate catalyst followed by the dropwise addition of 1,156 grams of deionized water. The pH of the cationic dispersion was adjusted to 6.0 by the dropwise addition of N,N-diethylethanolamine.

Steel panels, pretreated with zinc phosphate, were cathodically electrocoated in the bath at various voltages for 2 minutes at a bath temperature of 82°F (27°C). The wet coatings were cured at 350°F (176°C) for 30 minutes. Film thicknesses are shown in Table III.

TABLE III

| Voltage | Film Thicknesses in µm (mils) |
|---|---|
| 200 | 8.64 (0.34) |
| 250 | 21.59 (0.85) |

The cationic electrodeposition paint was pigmented with Pigment Paste A to yield a pigment-to-vehicle ratio of 0.2/1.0. The pigmented paint was electrocoated according to the procedure described above, and the data are reported in Table IV.

TABLE IV

| Voltage | Film Thicknesses in µm (mils) |
|---|---|
| 200 | 10.2 (0.40) |
| 250 | 38.1 (1.5) |

This data shows that a cationic electrodeposition paint can be prepared by mixing separately prepared cationic resins which can then be formulated together. When compared to cationic electrodeposition paint 10B, the data shows that this paint has increased film build.

Example 4

A cathodic electrodeposition dispersion was prepared by blending 215 grams of Cationic Resin 3A with 71.5 grams of Cationic Resin 3B and heating under nitrogen atmosphere at 75°C. While stirring continuously, 2.1 grams of dibutyl tin dilaurate catalyst and 179 grams of Curing Agent B were added.

The dropwise addition of 1,767 grams of deionized water was then begun. The pH of the cationic dispersion was adjusted to 6.0 by the dropwise addition of N,N-diethylethanolamine. This resultant dispersion is then used to make coatings by cathodic electrodeposition.

Steel panels, pretreated with zinc phosphate, were cathodically electrocoated in the bath at various voltages for 2 minutes at a bash temperature of 82°F(27°C). The wet coatings were cured at 275°F (135°C) for 30 minutes. Film thicknesses are shown in Table V.

TABLE V

| Voltage | Film Thicknesses in µm (mils) |
|---|---|
| 200 | 38.1 (1.5) |
| 225 | 71.1 (2.8) |
| 250 | 116.8 (4.6) |
| 275 | 139.7 (5.5) |

The cationic electrodeposition paint was pigmented with Pigment Paste A to yield a pigment-to-vehicle ratio of 0.2/1.0. The pigmented paint was electrocoated according to the procedure described above. The data are listed in Table VI.

TABLE VI

| Voltage | Film Thicknesses in µm (mils) |
|---|---|
| 200 | 25.4 (1.0) |
| 225 | 33.0 (1.3) |
| 250 | 40.6 (1.6) |
| 275 | 48.3 (1.9) |

This data shows that a cationic electrodeposition paint can be prepared by mixing separately prepared cationic resins which can then be formulated together. When compared to cationic electrodeposition paint 10B, this data shows that this paint has increased film build.

Example 5

A cathodic electrodeposition dispersion was prepared as follows: With 188 grams of Cationic Resin 3A was blended 62.5 grams of Cationic Resin 3B. This mixture was heated under nitrogen at 75°C. While stirring continuously, 2.25 grams of dibutyl tin dilaurate catalyst and 150 grams of Curing Agent A were added.

The dropwise addition of 1,485 grams deionized water was then begun. The pH of the cationic dispersion was adjusted to 6.0 by the dropwise addition of N,N-diethylethanolamine. This resultant dispersion was then used in a bath for cathodic electrodeposition.

Steel panels, pretreated with zinc phosphate, were cathodically electrocoated in the bath at various voltages for 2 minutes at a bath temperature of 82°F (27°C). The wet coatings were cured at 275°F (135°C) for 30 minutes. Film thicknesses are shown in Table VII.

TABLE VII

| Voltage | Film Thicknesses in µm (mils) |
|---|---|
| 200 | 38.1 (1.5) |
| 225 | 43.2 (1.7) |
| 250 | 48.3 (1.9) |

The cationic electrodeposition paint was pigmented with Pigment Paste A to yield a pigment-to-vehicle ratio of 0.2/1.0. The pigmented paint was electrocoated according to the procedure described above; the data are listed in Table VIII.

TABLE VIII

| Voltage | Film Thicknesses in µm (mils) |
|---|---|
| 200 | 33.0 (1.3) |
| 225 | 35.6 (1.4) |
| 250 | 40.6 (1.6) |
| 275 | 43.2 (1.7) |

This data shows that a cationic electrodeposition paint can be prepared by mixing separately prepared cationic resins which can then be formulated together. When compared to cationic electrodeposition paint 10B, this data shows this paint has increased film build.

Example 6

A cationic resin was prepared as follows: To 650 grams of an epoxy resin like Epoxy Resin 3A, which had an epoxide equivalent weight of 1,870 was added 65.0 grams of propylene glycol phenyl ether solvent at a temperature between 110° to 130°C. The resin was cooled to 80°C and an aqueous mixture consisting of 23.1 grams of N,N-dimethylethanolamine, 33.8 grams of an aqueous solution containing 88

percent of lactic acid, and 157 grams deionized water was added over a period of 30 minutes to produce an opaque, whitish, viscous mixture. A reaction temperature of 80 °C was maintained for 4 hours. The product was a clear, light yellow, highly viscous solution (Cationic Resin 6A).

A cationic resin was prepared as follows: To 400 grams of an epoxy resin like Epoxy Resin 3B from Example 3 which had an epoxide equivalent weight of 2,009 was added 40.0 grams of propylene glycol phenyl ether solvent at a temperature between 110 ° to 130 °C. The resin was cooled to 80 °C and an aqueous mixture consisting of 13.3 grams of N,N-dimethylethanolamine, 19.3 grams of an aqueous solution containing 88 percent lactic acid, and 89.6 grams of deionized water was added over a period of 30 minutes to produce an opaque, whitish, viscous mixture. A reaction temperature of 80 °C was maintained for 4 hours. The product was a clear, light yellow, highly viscous solution (Cationic Resin 6B).

To 160 grams of Cationic Resin 6A was added 53 grams of the Cationic Resin 6B and this mixture was heated under nitrogen atmosphere at 75 °C. While stirring continuously, a cationic dispersion was prepared by adding 139.0 grams of the Curing Agent C and 1.92 grams dibutyl tin dilaurate catalyst followed by the dropwise addition of 1,257 grams of deionized water. The pH of the cationic dispersion was adjusted to 6.0 by the dropwise addition of N,N-diethylethanolamine. The resultant dispersion was then used in a bath for cathodic electrodeposition.

Steel panels, pretreated with zinc phosphate, were cathodically electrocoated in the bath at various voltages for 2 minutes at a bath temperature of 82 °F (27 °C). The wet coatings were cured at 350 °F (176 °C) for 30 minutes. Film thicknesses are shown in Table IX.

TABLE IX

| Voltage | Film Thicknesses in µm (mils) |
|---|---|
| 200 | 16.00 (0.63) |
| 225 | 22.35 (0.88) |
| 250 | 24.13 (0.95) |
| 275 | 30.48 (1.20) |

A cationic electrodeposition paint was pigmented with Pigment Paste B to yield a pigment-to-vehicle ratio of 0.2 to 1.0. The pigmented paint was electrocoated according to the procedure described above, and the data are listed in Table X.

TABLE X

| Voltage | Film Thicknesses in µm (mils) |
|---|---|
| 200 | 17.02 (0.67) |
| 225 | 19.81 (0.78) |
| 250 | 20.32 (0.80) |
| 275 | 35.60 (1.4) |

This data shows that a cationic electrodeposition paint can be prepared by mixing separately prepared cationic resins which can be formulated together. When compared to cationic electrodeposition paint 10B, this data shows that this paint has increased film build.

Example 7

To 160 grams of Cationic Resin 6A from Example 6 was added 53 grams of Cationic Resin 6B and this mixture was heated under nitrogen atmosphere at 75 °C. While stirring continuously, a cationic dispersion was prepared by adding 120 grams of Curing Agent B and 1.92 gram of dibutyl tin dilaurate catalyst followed by the dropwise addition of 1,276 grams of deionized water.

The pH of the cationic dispersion was adjusted to 6.0 by the dropwise addition of N,N-diethylethanolamine. This dispersion was then used in a bath for cathodic electrodeposition.

Steel panels, pretreated with zinc phosphate, were cathodically electrocoated in the bath at various voltages for 2 minutes at a bath temperature of 82 °F (27 °C). The wet coatings were cured at 275 °F (135 °C) for 30 minutes. Film thicknesses are shown in Table XI.

TABLE XI

| Voltage | Film Thicknesses in µm (mils) |
|---|---|
| 200 | 40.6 (1.6) |
| 225 | 132.1 (5.2) |
| 250 | 157.5 (6.2) |
| 275 | 170.2 (6.7) |

The cationic electrodeposition paint was pigmented with Pigment Paste B to yield a pigment-to-vehicle ratio of 0.2/1.0. The pigmented paint was electrocoated according to the procedure described above; the data is listed in Table XII.

TABLE XII

| Voltage | Film Thicknesses in µm (mils) |
|---|---|
| 200 | 50.8 (2.0) |
| 225 | 61.0 (2.4) |
| 250 | 82.8 (3.3) |

This data shows that a cationic electrodeposition paint can be prepared by mixing separately prepared cationic resins which can be formulated together. When compared to cationic electrodeposition paint 10B, this data shows that this paint has increased film build.

Example 8

A cathodic electrodeposition dispersion was prepared as follows: With 160 grams of Cationic Resin 6A was blended 53.0 grams of Cationic Resin 6B. This mixture was heated under nitrogen at 75°C. While stirring continuously, 1.92 gram of dibutyl tin dilaurate catalyst and 128 grams of Curing Agent A were added. A dispersion was made by adding dropwise 1,268 grams deionized water.

The pH of the cationic dispersion was adjusted to 6.0 by the dropwise addition of N,N-diethylethanolamine. This dispersion was then used in a bath for cathodic electrodeposition.

Steel panels pretreated with zinc phosphate, were cathodically electrocoated in the bath at various voltages for 2 minutes at a bath temperature of 82°F (27°C). The wet coatings were cured at 275°F (135°C) for 30 minutes. Film thicknesses are shown in Table XIII.

TABLE XIII

| Voltage | Film Thicknesses in µm (mils) |
|---|---|
| 200 | 58.4 (2.3) |
| 225 | 91.4 (3.6) |
| 250 | 78.7 (3.1) |

The cationic electrodeposition paint was pigmented with Pigment Paste B to yield a pigment-to-vehicle ratio of 0.2/1.0. The pigmented paint was electrocoated according to the procedure described above; the data is listed in Table XIV.

TABLE XIV

| Voltage | Film Thicknesses in µm (mils) |
|---|---|
| 200 | 68.6 (2.7) |
| 225 | 78.7 (3.1) |
| 250 | 104.1 (4.1) |

This data shows that a cationic electrodeposition paint can be prepared by mixing separately prepared resins which can be formulated together. When compared to cationic electrodeposition paint 10B, this data shows that this paint has increased film build.

Example 9

A cationic electrodeposition resin was prepared as follows: An epoxy resin was prepared by reacting Epoxy Resin B with bisphenol A as described in Example 1. The epoxy equivalent weight of the resulting resin was 1700. When the 200 grams of resin cooled to 120 °C, 10.5 grams of an ethylene glycol butyl ether was added and the resin cooled further to 70 °C. A solution containing 10.76 grams of nicotinamide, 10.05 grams of lactic acid, and 52.92 grams of water was added slowly to the resin over 30 minutes while holding the temperature at 70 °C. The reactants were held at 70 °C for an additional 5.5 hours to prepare a resin having onium groups (Resin 9).

To the reaction product at 60 °C were added 5.63 grams of dibutyl tin dilaurate catalyst and 206.1 grams of Curing Agent A. A cationic dispersion was prepared by adding 1,492 grams of water to the resulting mixture, at 60 °C, using continuous agitation. (Resin Dispersion 9).

Cathodic electrodeposition paints were prepared by blending 64.3 grams of Pigment Paste C with the indicated resin dispersions.

| | |
|---|---|
| Paint 9 | 467.9 grams of Resin Dispersion 9 and 467.8 grams of ED 3002 |
| Paint 9A* | 935.7 grams of Resin Dispersion 9 |
| Paint 9B* | 935.7 grams of ED 3002 |

*Not an example of the invention.

Steel panels pretreated with zinc phosphate were cathodically electrocoated in separate baths containing the paints described above. Electrodeposition was conducted at various voltages for 2 minutes at a bath temperature of 82 °F (27 °C). The wet films were baked at 350 °F (176 °C) for 30 minutes. Film thicknesses are shown in Table XV.

TABLE XV

| | Electrodeposited Films | | | | |
|---|---|---|---|---|---|
| Paint | Film Thicknesses in µm (mils) | | | | |
| | 100 volts | 150 volts | 200 volts | 250 volts | 300 volts |
| 9 | -- | 18.80 (0.74) | 21.08 (0.83) | 23.88 (0.94) | 27.94 (1.1) |
| 9A* | 63.5-,182.9 (2.5-7.2) | (a) | (a) | (a) | (a) |
| 9B* | -- | 9.90 (0.39) | 12.70 (0.50) | 13.97 (0.55) | 16.51 (0.65) |

*Not examples of the invention.
(a) Ruptured

Example 10

A cationic electrodeposition resin wads prepared as follows: A cationic epoxy resin having onium groups was prepared by reacting, at 70 °C for 6 hours, a mixture of 240 grams of Epoxy Resin C and 60 grams of

ethylene glycol butyl ether solvent with an aqueous solution containing 12.2 grams of nicotinamide, 11.3 grams of lactic acid, and 59.8 grams of water. Upon completion of the onium-forming reaction, 245.9 grams of Curing Agent A and 3.95 grams dibutyl tin dilaurate catalyst were blended with the resin onium prior to the slow addition of 1,877.5 grams of water while agitating continuously at 60 °C (Resin Dispersion 10).

Cathodic electrodeposition paints were prepared by adding 172.4 grams of Pigment Paste C with the indicated resin dispersions.

| | |
|---|---|
| Paint 10 | 1,255.3 grams of Resin Dispersion 10<br>1,255.3 grams of Resin Dispersion 9 |
| Paint 9A*<br>Paint 10B* | 2,510.6 grams of Resin Dispersion 9<br>2,510.6 grams of Resin Dispersion 10 |

*Not an example of the invention.

Zinc phosphate pretreated steel panels were cathodically electrocoated in separate baths containing Paint 10, Paint 9A and Paint 10B. Electrodeposition was conducted at various voltages for 2 minutes at a bath temperature of 82 °F (27 °C). The resulting wet films were baked at 275 °F (135 °C) for 30 minutes. The film thicknesses are shown in Table XVI.

TABLE XVI

| Electrodeposited Films | | | | |
|---|---|---|---|---|
| Paint | Film Thicknesses in µm (mils) | | | |
| | 100 volts | 200 volts | 250 volts | 300 volts |
| 10 | 11.94 (0.47) | 20.32 (0.80) | (a) | (a) |
| 10B* | -- | 9.14 (0.36) | 9.14 (0.36) | 15.24 (0.60) |
| 9A* | 63.5-182.9 (2.5-7.2) | (a) | (a) | (a) |

*Not examples of the invention.
(a) Ruptured

## Example 11

A cationic electrodeposition resin was prepared as follows: Into a suitable reactor were charged 661 grams of Epoxy Resin B, 661 grams of Epoxy Resin A and 678 grams of bisphenol A. The mixture was heated to 90 °C and 3.5 grams of a 70 percent solution of ethyl triphenyl phosphonium acetate•acetic acid complex in methanol was then added. This mixture was stirred while heating at 1.5 °C/min to 150 °C whereupon it exothermed to 170 °C where it was held for approximately one hour. The epoxide equivalent weight was 1,720.

To 1,511.5 grams of the above resin was added 79.3 grams of ethylene glycol butyl ether at a temperature from 110 ° to 130 °C. The resin solution was further cooled to 80 °C and an aqueous mixture comprised of 80.1 grams nicotinamide, 85.1 grams of an aqueous solution containing 71 percent of lactic acid, and 191.9 grams of deionized water was added dropwise over a period of 30 minutes to produce an opaque, whitish, viscous mixture. Then another 191.9 grams of deionized water was added dropwise. A reaction temperature of 80 °C was maintained for 4 hours. The product was a clear, light yellow, highly viscous solution (Cationic Resin 11).

While agitating continuously, a cationic dispersion was prepared by adding 275.5 grams of the above cationic resin at 60 °C, 82.3 grams of Curing Agent A and 4.0 grams dibutyl tin dilaurate catalyst. Then 1,038.8 grams of deionized water was added dropwise to prepare an 18 percent solids dispersion (Resin Dispersion 11). This dispersion was pigmented with Pigment Paste C. A cationic electrodeposition bath (Resin Dispersion 11) was prepared by adding 50 weight percent of the above-described dispersion to 50 weight percent of ED 3002.

Zinc phosphate pretreated steel panels were cationically electrocoated with Epoxy Resin Blend Dispersion 11 in the bath at various voltages for 2 minutes at a bath temperature of 82 °F (27 °C). The wet

coatings were cured at 350°F (176°C) for 30 minutes. Film thicknesses are shown in Table XVII.

TABLE XVII

| Electrodeposited Films | | | | | |
|---|---|---|---|---|---|
| Resin Dispersion 11 | ED 3002 Percent | Film Thicknesses in µm (mils) | | | |
| | | 200 volts | 225 volts | 250 volts | 275 volts |
| 0* | 100 | 11.43 (0.45) | 13.97 (0.55) | 14.48 (0.57) | 16.26 (0.64) |
| 50 | 50 | 13.72 (0.54) | 16.00 (0.63) | 19.30 (0.76) | 23.37 (0.92) |

*Not an example of the invention.

This data shows that coating thicknesses can be increased by blending the described cationic electrodeposition dispersion, based on a polyetherpolyol epoxide and aromatic epoxide resin blend, with a commercial cathodic electrodeposition dispersion.

Example 12

A cationic electrodeposition resin was prepared as follows: Into a suitable reactor were charged 225 grams of Epoxy Resin B, 675 grams Epoxy Resin A, 397 grams of bisphenol A and 144.6 grams of 95 percent grade para-nonyl phenol. The mixture was heated to 90°C and 1.4 grams of a 70 percent solution of ethyl triphenyl phosphonium acetate•acetic acid complex in methanol was then added. This mixture was stirred while heating at 1.5°C/min to 150°C whereupon it exothermed to 170°C where it was held for approximately one hour. The epoxide equivalent weight was 1,564.

To the above resin was added 158 grams of propylene glycol phenyl ether solvent at a temperature between 110°-130°C. The resin was further cooled to 60°C and 68 grams of 2-(methylamino)ethanol was added dropwise. This mixture was heated at 60°C for one hour.

To 235.5 grams or the resulting cationic resin at 60°C was added 132.9 grams of Curing Agent B and 5.0 grams of dibutyl tin dilaurate catalyst. While agitating continuously, a cationic dispersion was prepared by adding to the resultant mixture, at 60°C, 16.4 grams of an aqueous solution containing 71 percent of lactic acid Followed by the show addition of 1,475 grams of deionized water. This dispersion was pigmented with Pigment Paste C yielding a pigment-to-vehicle ratio of 0.2/1.0 to form Resin Dispersion 12.

Resin Dispersion 12 was blended with a commercial conventional cathodic electrodeposition primer, ED 3002 in the proportion of 75 weight percent of the former and 25 weight percent of the latter to form a cationic electrodeposition bath.

Steel panels, pretreated with zinc phosphate, were cathodically electrocoated in the bath at 200, 225, 250 and 275 volts for 2 minutes at a bath temperature of 82°F (27°C). The wet coatings were cured at 350°F (176°C) for 30 minutes. Film thicknesses are shown in Table XVIII.

TABLE XVIII

| Electrodeposited Films | | | | | |
|---|---|---|---|---|---|
| Resin Dispersion 12 | ED 3002 Percent | Film Thicknesses in µm (mils) | | | |
| | | 200 volts | 225 volts | 250 volts | 275 volts |
| 0* | 100 | 11.43 (0.45) | 13.97 (0.55) | 14.48 (0.57) | 16.26 (0.64) |
| 75 | 25 | 20.32 (0.80) | 35.56 (1.4) | 35.56 (1.4) | 35.56 (1.4) |

*Not an example of the invention.

This data shows that coating thicknesses can be increased by blending the described cationic electrodeposition dispersion, based on a polyetherpolyol epoxide and aromatic epoxide resin blend, with a commercial cathodic electrodeposition dispersion.

Example 13

A cationic electrodeposition resin was prepared by charging into a suitable reactor 110 grams of Epoxy Resin E and 90 grams of Bisphenol A. The mixture was heated to 80°C and 0.11 gram of ethyltriphenyl phosphonium acetate•acetic acid complex blended with 0.05 gram of methanol was added. This blend was stirred while heating at 1.5°C/min. to 150°C whereupon it exothermed to 165°C where the temperature was held for about one hour. The epoxy equivalent weight (EEW) of the resulting resin was 1654 grams/equivalent.

After cooling this resin to 120°C, 22 grams of propylene glycol phenyl ether solvent was added. The resin solution was cooled to 60°C and 9 grams of 2-(methylamino)ethanol was added whereupon it exothermed to 67°C and the temperature was controlled at 80°C for one hour.

To the reaction product at 60°C, were added 3.29 grams of dibutyl tin dilaurate catalyst and 159.5 grams of Curing Agent C.

While agitating continuously, a cationic dispersion was prepared by adding to the resulting mixture, at 60°C, 12.3 grams of an aqueous solution containing 72.5 percent by weight of lactic acid which was followed by the slow addition of 1446 grams of deionized water. This product is referred to as Resin Dispersion 13.

Resin Dispersion 13 was blended with 123 grams of Pigment Paste D to yield a pigmented cathodic electrodeposition paint having a pigment to binder ratio of 0.2 to 1.

The above prepared pigmented cationic electrodeposition paint was blended with various amounts of a commercial cathodic electrodeposition primer, ED 3002 available from PPG Industries, Inc. Cationic electrodeposition baths were prepared by adding zero, 10, 20, 25 and 30 weight percent of the above described pigmented dispersion to the ED 3002. Film thicknesses are given in Table XIX.

TABLE XIX

| ELECTRODEPOSITED FILMS | | | | |
|---|---|---|---|---|
| Film Thickness in µm (mils) at the Indicated Voltage | | | | |
| PIGMENTED RESIN DISPERSION PERCENT | ED 3002 PERCENT | 200 VOLTS | 250 VOLTS | 300 VOLTS |
| 0* | 100 | 11.43 (0.45) | 14.48 (0.57) | 16.26 (0.64) |
| 10 | 90 | 16.26 (0.64) | 21.59 (0.85) | 53.34 (2.1) |
| 20 | 80 | 19.81 (0.78) | 27.94 (1.1) | 60.96 (2.4) |
| 25 | 75 | 22.10 (0.87) | 33.02 (1.3) | 66.04 (2.6) |
| 30 | 70 | 25.15 (0.99) | 43.18 (1.7) | 71.12 (2.8) |

*Not an example of the invention.

The above data shows that film thicknesses can be controlled by blending different proportions of the described critical cationic electrodeposition dispersion with a commercial cathodic electrodeposition paint and applying the resulting paint at a selected deposition voltage.

Example 14

A cationic electrodeposition resin was prepared by charging into a suitable reactor 630 grams of Epoxy Resin F and 370 grams of Bisphenol A. The mixture was heated to 80°C and 0.63 gram of ethyltriphenyl phosphonium acetate•acetic acid complex blended with 0.27 gram of methanol was added. This blend was stirred while heating at 1.5°C/min. to 150°C whereupon it exothermed to 165°C where the temperature was held for about one hour. The epoxy equivalent weight (EEW) of the resulting resin is 1453 grams/equivalent.

After cooling, 175 grams of this advanced epoxy resin to 120°C, 20.4 grams of propylene glycol phenyl ether solvent was added. The resin solution was cooled to 60°C and 9 grams of 2-(methylamino)ethanol was added whereupon it exothermed to 67°C and the temperature was controlled at 80°C for one hour.

To the reaction product at 60°C, are added 1.84 grams of dibutyl tin dilaurate catalyst and 131.4 grams of Curing Agent E.

While agitating continuously, a cationic dispersion was prepared by adding to the resulting mixture, at 60°C, 103 grams of an aqueous solution containing 72.5 percent by weight of lactic acid which was followed by the slow addition of 1237 grams of deionized water. This product is Resin Dispersion 14.

Resin Dispersion 14 from above was blended with Pigment Paste D to yield a pigmented cathodic electrodeposition paint having a pigment to binder ratio of 0.2 to 1.

The above prepared pigmented cationic electrodeposition paint was blended with various amounts of a commercial cathodic electrodeposition primer, ED 3002 available from PPG Industries, Inc. Cationic electrodeposition baths were prepared by adding zero, 10, 20, 25 and 30 weight percent of the above described pigmented dispersion to the ED 3002.

Steel panels pretreated with zinc phosphate were cathodically electrodeposited (coated) at various voltages for 2 minutes at a bath temperature of 80°F (27°C). The wet films were baked at 350°F (176°C) for 30 minutes. Film thicknesses are given in Table XX.

TABLE XX

| ELECTRODEPOSITED FILMS | | | | |
|---|---|---|---|---|
| Film Thickness in µm (mils) at the Indicated Voltage. | | | | |
| PIGMENTED RESIN DISPERSION PERCENT | ED 3002 PERCENT | 200 VOLTS | 250 VOLTS | 300 VOLTS |
| 0* | 100 | 11.43 (0.45) | 14.48 (0.57) | 16.26 (0.64) |
| 10 | 90 | 13.21 (0.52) | 17.02 (0.67) | 19.05 (0.75) |
| 20 | 80 | 14.99 (0.59) | 18.03 (0.71) | 19.81 (0.78) |
| 25 | 75 | 15.75 (0.62) | 19.05 (0.75) | 23.37 (0.92) |
| 30 | 70 | 17.02 (0.67) | 20.07 (0.79) | 24.89 (0.98) |

*Not an example of the invention.

The above data shows that the film thickness can be controlled by blending different proportions of the described cationic electrodeposition dispersion with a commercial cathodic electrodeposition paint and applying the resulting paint at a selected deposition voltage.

Example 15

A cationic electrodeposition resin was prepared by charging into a suitable reactor 464 grams of Epoxy Resin G and 336 grams of Bisphenol A. The mixture was heated to 80°C and 0.46 gram of ethyltriphenyl phosphonium acetate•acetic acid complex blended with 0.20 gram of methanol was added. This blend was stirred while heating at 1.5°C/min. to 150°C whereupon it exothermed to 165°C where the temperature was held for about one hour. The epoxy equivalent weight (EEW) of the resulting resin is 1830 grams/equivalent.

After cooling, 175 grams of this advanced epoxy resin to 120°C, 19.4 grams of propylene glycol phenyl ether solvent was added. The resin solution was cooled to 60°C and 7.5 grams of 2-(methylamino)ethanol was added whereupon it exothermed to 67°C and the temperature was controlled at 80°C for one hour.

To the reaction product at 60°C, are added 1.82 grams of dibutyl tin dilaurate catalyst and 130.4 grams of Curing Agent E.

While agitating continuously, a cationic dispersion was prepared by adding to the resulting mixture, at 60°C, 8.57 grams of aqueous solution containing 72.5 percent by weight of lactic acid which was followed by the slow addition of 1223 grams of deionized water. This product was Resin Dispersion 15.

The Resin Dispersion from above was blended with the Pigment Paste E to yield a pigmented cathodic electrodeposition paint having a pigment to binder ratio of 0.2 to 1.

The above prepared pigmented cationic electrodeposition paint was blended with various amounts of a commercial cathodic electrodeposition primer, ED 3002 available from PPG Industries, Inc. Cationic electrodeposition bath were prepared by adding zero, 10, 20, 25 and 30 weight percent of the above described pigmented dispersion to the ED 3002.

Steel panels pretreated with zinc phosphate were cathodically electrodeposited (coated) at various voltages for 2 minutes at a bath temperature of 80°F (27°C). The wet films were baked at 350°F (176°C) for 30 minutes. Film thicknesses are given in Table XXI.

TABLE XXI

| ELECTRODEPOSITED FILMS | | | | |
|---|---|---|---|---|
| Film Thickness in µm (mils) at the Indicated Voltage. | | | | |
| PIGMENTED RESIN DISPERSION PERCENT | ED 3002 PERCENT | 200 VOLTS | 250 VOLTS | 300 VOLTS |
| 0* | 100 | --- | 8.89 (0.35) | 10.20 (0.40) |
| 10 | 90 | 7.62 (0.30) | 9.14 (0.36) | 11.94 (0.47) |
| 20 | 80 | 9.40 (0.37) | 10.67 (0.42) | 12.70 (0.50) |
| 25 | 75 | 10.20 (0.40) | 11.68 (0.46) | 14.22 (0.56) |
| 30 | 70 | 10.92 (0.43) | 13.72 (0.54) | 16.00 (0.63) |

*Not an example of the invention.

The above data shows that the film thickness can be controlled by blending different proportions of the described cationic electrodeposition dispersion with a commercial cathodic electrodeposition paint and applying the resulting paint at a selected deposition voltage.

Example 16

Into a 2 liter, round bottom flask was charged 161.4 g of the diglycidyl ether of an adduct of one mole bisphenol A and six moles ethylene oxide and 38.6 g bisphenol A. The mixture was heated under nitrogen to 97°C and 0.32 g of a 70 percent solution of ethyl triphenylphosphonium acetate•acetic acid complex in methanol was added. The mixture was heated to 175°C over 37 minutes and held for 53 minutes, at which time the epoxide equivalent weight was 1530. An additional 0.1 g of the 70 percent catalyst solution was added and reaction was continued for 25 minutes, at which time the epoxide equivalent weight was 1590. The product was cooled and diluted with 28.7 g ethylene glycol hexyl ether and 21.5 g propylene glycol methyl ether. The solution was cooled to 85°C and 9.5 g 2-(methylamino)ethanol was added. The temperature was maintained at 85 to 89°C for 70 minutes. Curing Agent D (89.2 g), T-12 catalyst (4.6 g), and 15.5 g of 73.4 percent lactic acid solution mixed with 16.5 g of water were then added sequentially and mixed at 85°C. Water was added dropwise over a period of 55 minutes at 60 to 70°C until the mixture inverted to an aqueous dispersion. The dispersion was cooled and further diluted with water to an approximately 18 percent non-volatile content.

The aqueous dispersion (1684.3 g) was pigmented with 158.8 g of pigment dispersion A and panels were electrocoated and cured. The coatings had the following film thicknesses:

| Deposition Voltage (volts) | Film Thicknesses in µm (mils) |
|---|---|
| 50 | 22.86 (0.90) |
| 75 | rupturing |
| 150 | rupturing |

The coatings were rough and showed evidence of extreme gassing during deposition. The coatings withstood 10 MIBK double rubs without marring but showed marring after 20 double rubs. The coatings showed 4.7 to 6.4 mm (3/16 to 1/4 inch) total corrosion creep (both sides) after 330 hours of salt spray exposure. This material is useful as an additive to another cathodic electrodeposition coating composition to increase film thickness, as demonstrated in Example 17.

Example 17

The pigmented dispersion of Example 16 (145.0 g) was added to the pigmented dispersion of Comparative Example A (1305.0 g) to provide a pigmented dispersion in which 10 percent of the final dispersion is provided by the material of Example 16, in order to demonstrate its utility as an additive to increase the film thickness of a low build system. Panels were electrocoated and cured as previously described. An additional 181.3 g of the pigmented dispersion of example 16 was then added to the bath in order to raise the content of the additive to 20 percent of the total. Panels were again coated and then an

appropriate amount of the additive (material of Example 16) was added to the bath to raise the level to 30 percent. The process was again repeated at the 40 percent level. The film thicknesses at various voltages for each level of additive are shown in the following table:

| Voltage (volts) | Film Thicknesses at additive Level in µm (mils) (% of total bath) | | | | |
|---|---|---|---|---|---|
| | 0 | 10 | 20 | 30 | 40 |
| 150 | - | - | - | - | 12.70 (0.50) |
| 175 | - | - | - | - | 18.23 (0.72) |
| 200 | 4.06 (0.16) | 4.06 (0.16) | 6.35 (0.25) | 10.41 (0.41) | 24.64 (0.97) |
| 250 | 5.08 (0.20) | 6.60 (0.26) | 9.65 (0.38) | 14.73 (0.58) | - |
| 300 | 6.35 (0.25) | 8.13 (0.32) | 11.94 (0.47) | - | - |

The coatings were progressively smoother and more glossy with increasing level of the additive. The rupture voltage dropped with increasing level of the additive. At 30 and 40 percent, the rupture voltages were 280 and 200 volts, respectively. All of the coatings withstood 50 MIBK double rubs, but showed some marring at 100. The salt spray test results are shown in the following table.

| Level of additive %/ Hours of Exposure | Corrosion from scribe in mm (total both sides) |
|---|---|
| 0/383 | 0.4-0.8 (1/64 to 1/32 inch) |
| 10/330 | 0 - 0.4 (0 to 1/64 " ) |
| 20/330 | 0 - 0.4 (0 to 1/64 " ) |
| 30/330 | 0.4 (1/64 " ) |
| 40/330 | 0 - 0.4 (0 to 1/64 " ) |

Pigment Dispersion A

Into a one gallon, metal paint can was placed 698.0 g of pigment vehicle D, 108.3 g ASP 200 clay, 41.9 g EP202 lead silicate, 14.7 g Raven 410 carbon black, and 537.0 g R-900 titanium dioxide. A volume of about one-half the bulk pigment volume of chrome-plated steel diagonals was added and the pigments were ground dispersed by shaking the sealed paint can on a paint shaker. Water was added as the grinding progressed until a total of 186.0 g of water had been added. The diagonals were removed by passing the dispersion through a screen. The pigment dispersion contained 44.2 percent pigments by weight.

Comparative Example A:

To a 2 liter, round-bottomed flask equipped with a mechanical stirrer, condenser, nitrogen inlet, and a thermometer was charged 665.1 grams of D.E.R.*331 (a liquid epoxy resin having an epoxide equivalent weight of 187 available from the Dow Chemical Company) and 335.2 g bisphenol A. The mixture was heated under a nitrogen atmosphere to 97°C and 1.66 g of a 70 percent solution of ethyltriphenyl phosphonium acetate•acetic acid complex in methanol was added. The mixture was heated to 135°C and allowed to exotherm to 194°C. The temperature was allowed to fall to 175°C and maintained at that temperature for one hour. The product was isolated by cooling and flaking. The solid epoxy resin had an epoxide equivalent weight of 1650.

A portion (230.3 grams) of this solid epoxy resin was heated and dissolved in 24.7 grams of propylene glycol methyl ether and 32.9 g ethylene glycol hexylether in a similar reactor. At 86°C, 10.5 g of 2-(methylamino)ethanol was added over a period of ten minutes. The reaction mixture was then held at 90 to 100°C for 90 minutes. The product was cooled to 80°C and 101.3 g of curing agent D was added and mixed. T-12 catalyst (Air Products) (5.3 g) and 17.1 g of 73.4 percent lactic acid were added sequentially.

Water was then added dropwise over a period of two hours at 71 to 79 °C until the mixture inverted to form a milky, aqueous dispersion. The dispersion was cooled and further diluted with water to form an approximately 18 percent non-volatile product.

This aqueous dispersion (1958.1 g) was pigmented by adding 178.3 g of pigment dispersion A with stirring. Cold rolled steel test (27 °C) panels (B40 treatment, P60 rinse) were electrocoated at 80 °F (27 °C) for two minutes as the cathode at various voltages in the resulting bath. The coatings were cured at 177 °C for thirty minutes. The resulting film thickness were as follows:

| Deposition Voltage | Film Thicknesses in µm (mils) |
|---|---|
| 200 | 4.83 (0.19) |
| 225 | 4.57 (0.18) |
| 250 | 4.83 (0.19) |
| 275 | 5.59 (0.22) |
| 300 | 6.35 (0.25) |

The coatings had a slight orange peel texture, but were free of pinholes, and the current cutoff during deposition and the film thicknesses were indicative of adequate coalescence upon deposition. The coatings passed 20 MIBK double rubs without marring but showed some dulling at 50 double rubs. The coating demonstrated 0.4 - 0.8 mm (1/64 to 1/32 inch) corrosion creep (total of both sides of scribe) after 383 hours of salt spray testing under ASTM B-117.

CURING AGENT D

Toluene diisocyanate (1363.1 g) was charged to a 5 liter, round-bottomed flask equipped with a condenser, mechanical stirrer, nitrogen inlet, addition funnel and thermometer. The material was heated to 58 °C and a mixture of 308.9 g of polypropylene glycol of average molecular weight of 400 and 1.29 g T-12 catalyst was added dropwise with cooling to maintain 58 °C. An additional 523.5 g of the polypropylene glycol was added afterward. The total time for the two feeds was 140 minutes. 2-Ethylhexanol (1527.6 g) was then added over a period of 220 minutes at 58-63 °C. The reaction mixture was then heated at 73 °C for 45 minutes and the resulting blocked isocyanate crosslinker was a clear, viscous liquid at room temperature.

Pigment Vehicle D

Into a 5 liter, round-bottomed flask equipped with condenser, addition funnel, nitrogen inlet, mechanical stirrer, and thermometer was charged 920.5 g D.E.R. 361 (a commercially available epoxy resin having an epoxide equivalent weight of 188) and 298.1 g bisphenol A. The mixture was heated under nitrogen to 85 °C and 1.44 g of a 70% solution of ethyl triphenylphosphonium acetate•acetic acid complex in methanol was added. The mixture was heated to 150 °C and allowed to exotherm to 184 °C. The temperature was brought down to 175 °C and the reaction was maintained at 175 °C for one hour. The resin was cooled to 83 °C and diluted with 304.6 g methyl ethyl ketone. The solution was cooled to 65 °C and 167.5 g 2-(methylamino)-ethanol was added over 19 minutes at 64-70 °C. The reaction was heated to 80-84 °C for 65 minutes. The solution was then cooled to 75 °C and 276.8 g of 72.5% lactic acid solution in water was added. The mixture was then diluted with water to an approximately 40% non-volatile content to product a clear, viscous solution.

**Claims**

**1.** A blend of two epoxy cationic resins comprising

I. 10 to 90 weight percent of an advanced epoxy cationic resin prepared by forming an advanced epoxy resin having terminal oxirane groups and subsequently converting at least part of the terminal oxirane groups of the advanced epoxy resin to cationic groups by reacting the resin with a nucleophilic compound for forming a cationic site in the molecule and adding an organic acid and water simultaneously with or subsequently to addition of the nucleophile whereby the advanced epoxy cationic resin has a charge density of from 0.2 to 0.6 milliequivalent of cationic charge per gram of resin and the advanced epoxy resin is prepared by reacting in the presence of a suitable catalyst

(A) 60 to 90 weight percent of glycidyl ethers comprising:

(A-1) at least one diglycidylether of a diol which is a diglycidyl ether of a polyetherdiol, a diglycidyl ether of an aliphatic diol essentially free of ether oxygen atoms or a diglycidyl ether of an oxyalkylated diol, and

(A-2) a diglycidylether of a dihydric phenol, with

(B) 10 to 40 weight percent of a dihydric phenol, and optionally

(C) a monofunctional capping agent,

wherein (A-1) and (A-2) are employed in such quantities that 20 to 100 Weight percent of the glycidyl ethers (A) are contributed by component (A-1) and from zero to 80 weight percent of the glycidyl ethers are contributed by component (A-2), and components (A) and (B) are employed in such quantities that the resultant epoxide equivalent weight is from 350 to 10,000, and

II. 90 to 10 weight percent of a different epoxy-based cathodic electrodeposition resin, with the proviso that:

resin II is not an advanced epoxy cationic resin composition prepared by forming an advanced epoxy resin having terminal oxirane groups and subsequently converting at least part of the terminal oxirane groups of the advanced epoxy resin to cationic groups by reacting the resin with a nucleophilic compound for forming a cationic site in the molecule and adding an organic acid and water simultaneously with or subsequently to addition of the nucleophile whereby the advanced epoxy cationic resin composition has a charge density of from 0.2 to 0.6 milliequivalent of cationic charge per gram of resin and whereby the advanced epoxy resin is prepared by reacting in the presence of a suitable catalyst

60 to 90 weight percent of glycidyl ethers (A) comprising:

(A-1) at least one diglycidylether of a diol which is a diglycidyl ether of a polyetherdiol, a diglycidyl ether of an aliphatic diol essentially free of ether oxygen atoms or a diglycidyl ether of an oxyalkylated diol, and

(A-2) a diglycidylether of a dihydric phenol, with

40 to 10 weight percent of a dihydric phenol (B),

wherein (A-1) and (A-2) are employed in such quantities that 10 to 75 weight percent of the glycidyl ethers (A) are contributed by component (A-1) and from 25 weight percent to 90 weight percent of the glycidyl ethers are contributed by component (A-2), and components (A) and (B) are employed in such quantities that the resultant epoxide equivalent weight is from 350 to 10,000.

**2.** The blend of Claim 1 in which

(a) the diglycidyl ether of a diol has the structural formula

(III)

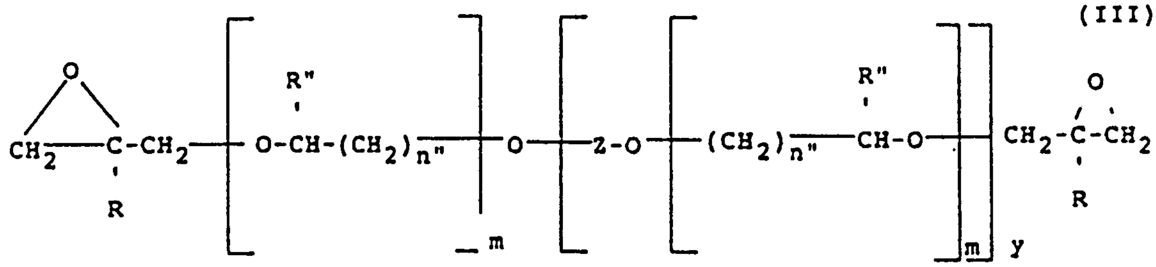

wherein each R is independently hydrogen or a hydrocarbyl group having from 1 to 3 carbon atoms; each R" is hydrogen or an alkyl group having from 1 to 6 carbon atoms, m is an integer from 0 to 50; n" has a value of 1 to 3; y is 0 or 1; and Z is a divalent aliphatic or cycloaliphatic group having from 2 to 20 carbon atoms or one of the groups represented by the formulas

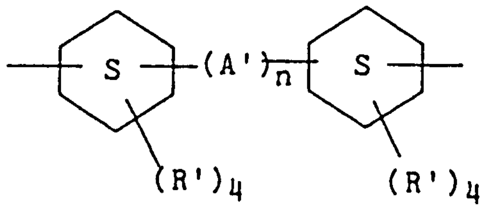

,

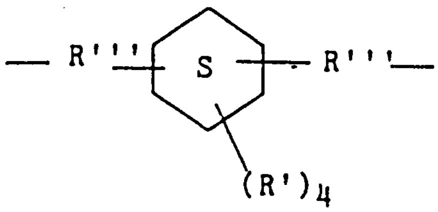

,

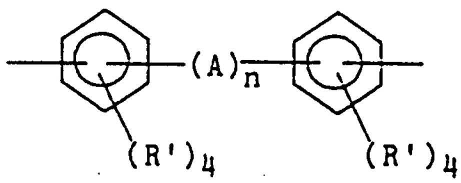

,

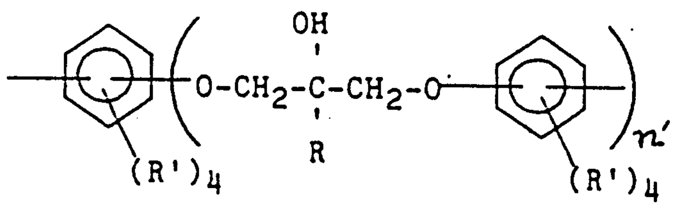

,

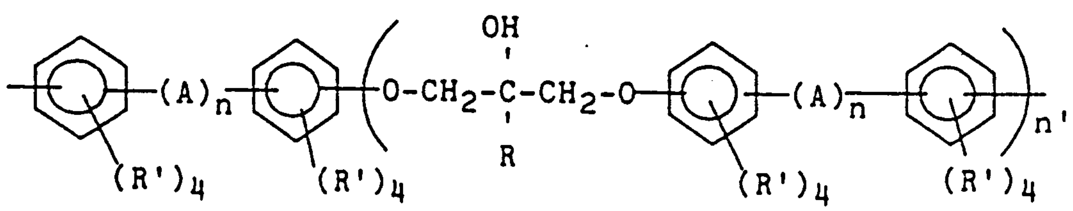

or

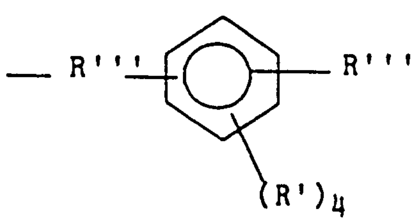

wherein R and R" are defined as hereinbefore and A' or R''' is a divalent hydrocarbon group having from 1 to 6 carbon atoms; A is a divalent hydrocarbon group having from 1 to 12 carbon atoms,

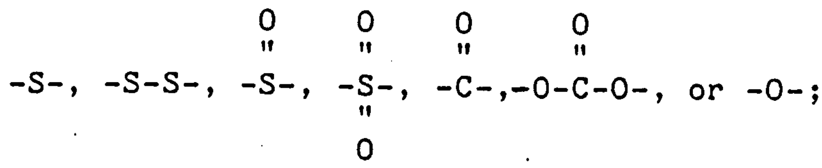

each R' is independently hydrogen, a hydrocarbyl or hydrocarbyloxy group having from 1 to 4 carbon atoms, or a halogen; n has a value from 0 to 1; and n' has a value from 0 to 10, and
(b) component (A-2) is a diglycidyl ether of a dihydric phenol represented by the following Formulas I or II

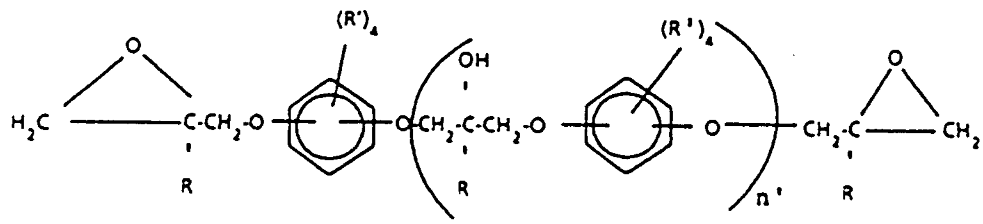

(I)

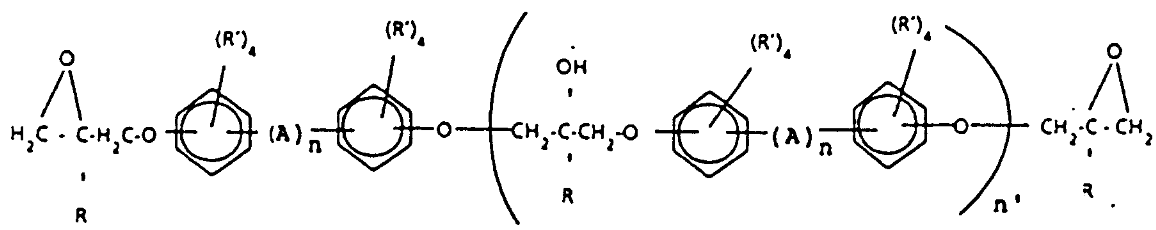

(II)

wherein each A is independently a divalent hydrocarbon group having from 1 to 12 carbon atoms, -S-, -S-S-, -SO-, $-SO_2-$, -CO-, -O-CO-O- or -O-; each R is independently hydrogen or a hydrocarbyl group having from 1 to 3 carbon atoms; each R' is independently hydrogen, a hydrocarbyl or hydrocarbyloxy group having from 1 to 4 carbon atoms or a halogen; n has a value from zero to 1; and n' has a value from zero to 10.

**3.** The blend of Claim 2 in which the diglycidyl ether of the diol is the diglycidyl ether of a polyetherdiol having the structural formula

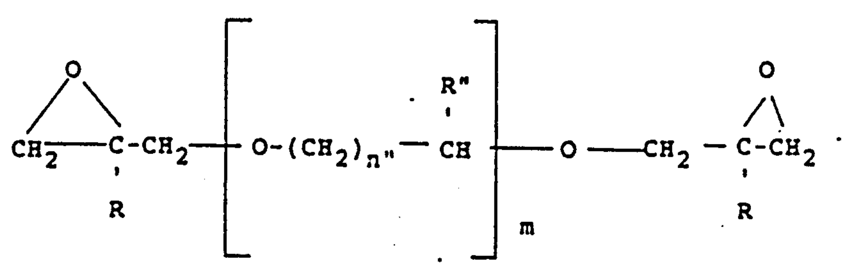

V

wherein m is an integer from 2 to 50 and R, R" and n" are as defined in Claim 2.

4. The blend of Claim 2 in which the diglycidyl ether of the diol is the diglycidyl ether of an aliphatic diol essentially free of ether oxygen atoms having the structural formula

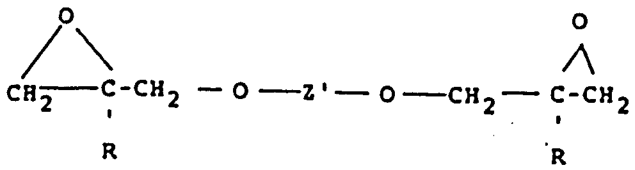

VII

wherein Z' is a divalent aliphatic or cycloaliphatic group having from 2 to 20 carbon atoms or one of the groups represented by the structural formulas

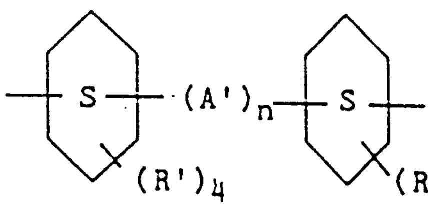

or

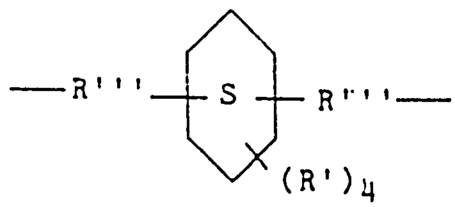

each R' is independently hydrogen or a hydrocarbyl group having from 1 to 4 carbon atoms; and each R, A', R''' and n is as defined in Claim 2.

5. The blend of Claim 2 wherein the diglycidyl ether of the diol is the diglycidyl ether of an oxyalkylated diol having the structural formula

IX

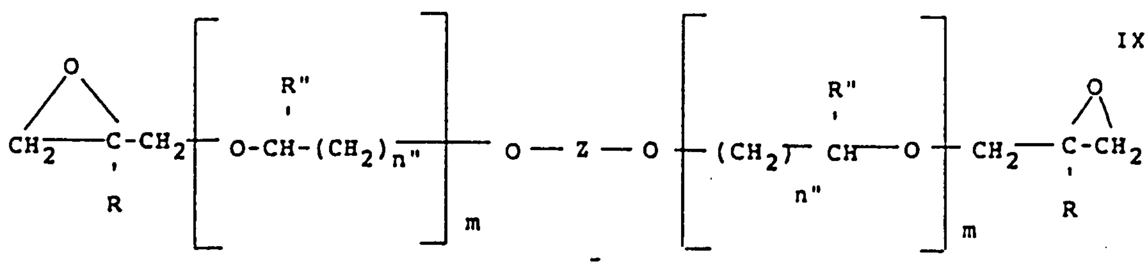

wherein m is an integer from 1 to 25, and R, R', R", R''', A, A', Z, n, n' and n" are as defined in Claim 2.

6. The blend of Claim 2 wherein component A-2 is an epoxy resin represented by formula II wherein each R is hydrogen, A is an isopropylidene group and n' is 0.1-5 and n is 1.

7. A process for preparation of an advanced epoxy cationic resin from an epoxy resin composition having terminal oxirane groups which includes the step of converting oxirane groups to cationic groups by reacting a nucleophilic compound with at least some of the oxirane groups of the epoxy resin composition wherein an organic acid and water are added during some part of this conversion, characterized by using as the epoxy resin composition a blend of two epoxy cationic resins as defined in Claim 1.

8. The process of Claim 7 in which the converting of the resins to cationic resins occurs after the different epoxy resins are blended.

9. The process of Claim 7 in which the resins are blended after each resin has been converted to a cationic resin.

10. The process of Claim 7 in which the resins are in the form of stable aqueous oil-in-water dispersions when the blending is carried out.

11. The process of Claim 7 in which the diglycidyl ether of a diol has the structural formula

(III)

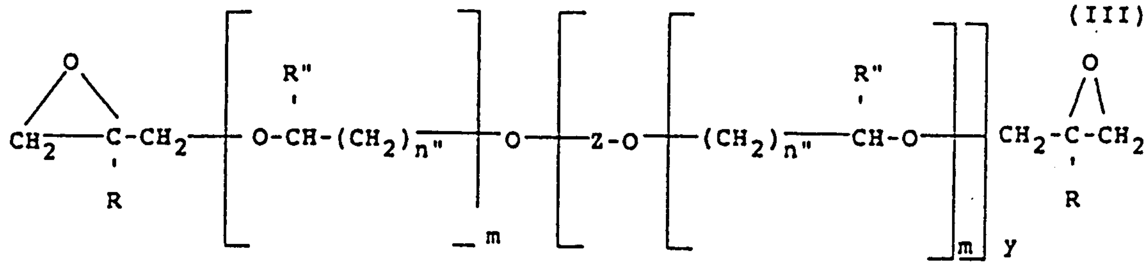

wherein each R is independently hydrogen or a hydrocarbyl group having from 1 to 3 carbon atoms; each R" is hydrogen or an alkyl group having from 1 to 6 carbon atoms, m is an integer from 0 to 50; n" has a value of 1 to 3; y is 0 or 1; and Z is a divalent aliphatic or cycloaliphatic group having from 2 to 20 carbon atoms or one of the groups represented by the formulas

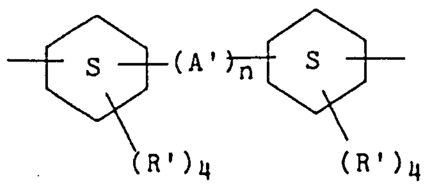

,

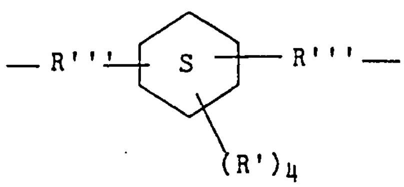

,

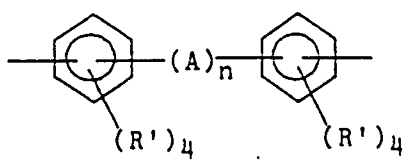

,

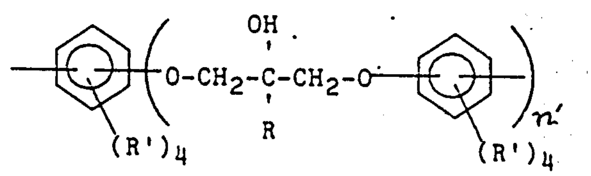

,

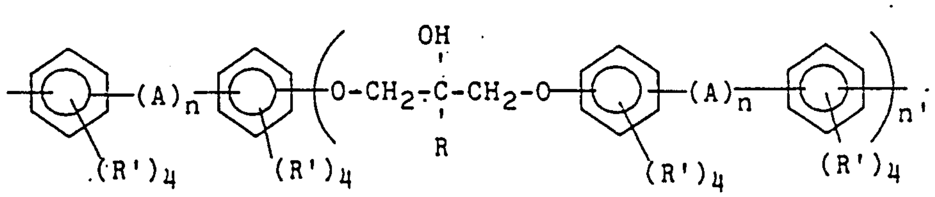

or

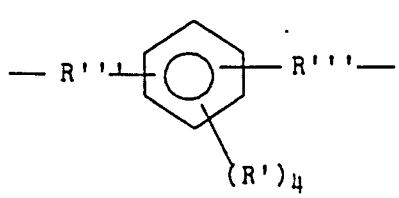

wherein R and R" are defined as hereinbefore and A' or R''' is a divalent hydrocarbon group having from 1 to 6 carbon atoms; A is a divalent hydrocarbon group having from 1 to 12 carbon atoms,

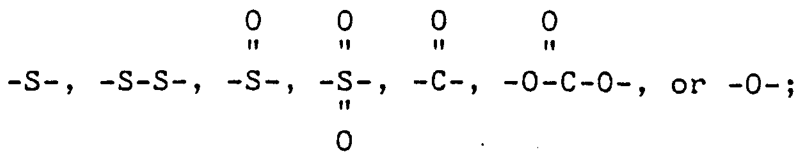

each R' is independently hydrogen, a hydrocarbyl or hydrocarbyloxy group having from 1 to 4 carbon atoms, or a halogen; n has a value from 0 to 1; and n' has a value from 0 to 10.

**12.** The process of Claim 11 wherein the diglycidyl ether of the diol is the diglycidyl ether of a polyetherdiol having the structural formula

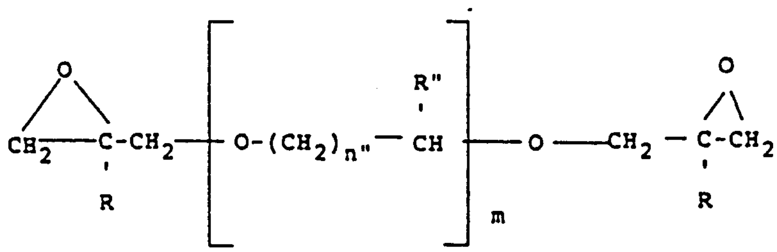 V

wherein m is an integer from 2 to 50 and R, R" and n" are as defined in Claim 11.

**13.** The process of Claim 11 wherein the diglycidyl ether of the diol is the diglycidyl ether of an aliphatic diol essentially free of ether oxygen atoms having the structural formula

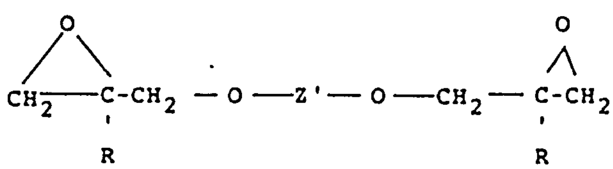 VII

wherein Z' is a divalent aliphatic or cycloaliphatic group having from 2 to 20 carbon atoms or one of the groups represented by the structural formulas

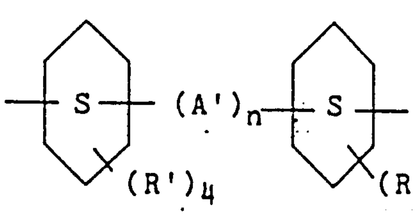 or 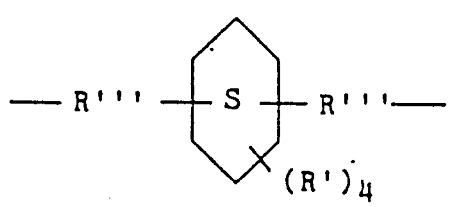

each R' is independently hydrogen or a hydrocarbyl group having from 1 to 4 carbon atoms; and each R, A', R''' and n is as defined in Claim 11.

**14.** The process of Claim 11 wherein the diglycidyl ether of the diol is the diglycidyl ether of an oxyalkylated diol having the structural formula

IX

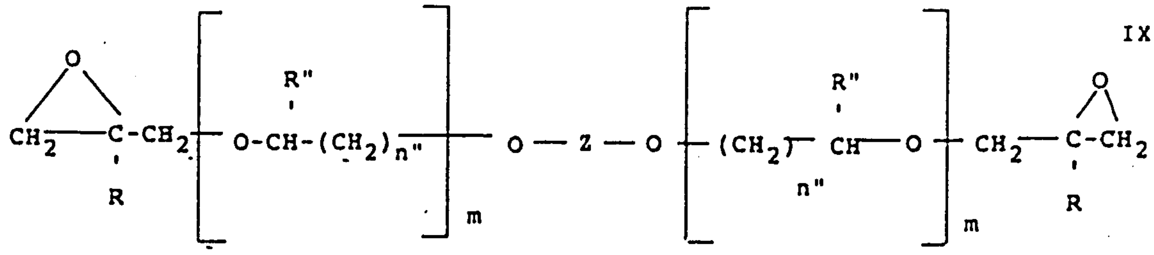

wherein m is an integer from 1 to 25, and R, R', R", R"', A, A', Z, n, n' and n" are as defined in Claim 11.

**15.** The process of any one of Claims 7 to 14 wherein the diglycidyl ether of a dihydric phenol has the structural formula

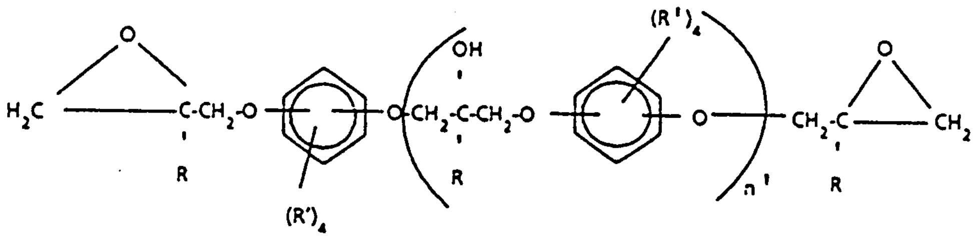

(I)

or

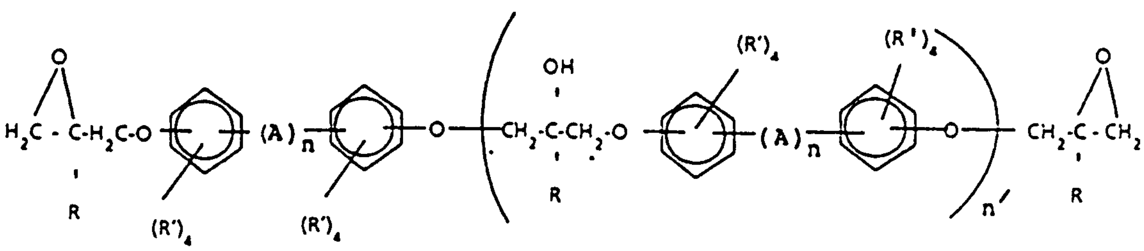

(II)

wherein A is a divalent hydrocarbon group having from 1 to 12 carbon atoms;

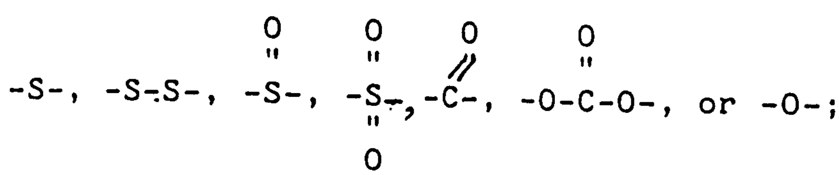

each R' is independently hydrogen, a hydrocarbyl or hydrocarbyloxy group having from 1 to 4 carbon atoms, or a halogen; each R is independently hydrogen or a hydrocarbyl group having from 1 to 3 carbon atoms; n has a value from zero to 1; and n' has a value from zero to 10.

**16.** A coating composition which is suitable for electrodeposition comprising an aqueous dispersion of the blend of Claim 1 in combination with a curing agent selected from a blocked polyisocyanate, an amine aldehyde resin, a phenol aldehyde resin and a polyester resin;

**17.** The coating composition of Claim 16 which also contains a pigment.

**18.** The use of the advanced epoxy cationic resin of Claim 1 or 2 in electrodeposition coating compositions.

**Patentansprüche**

**1.** Mischung von zwei kationischen Epoxydharzen, umfassend:

I. 10 bis 90 Gew.-% eines verlängerten kationischen Epoxydharzes, hergestellt durch Bildung eines verlängerten Epoxydharzes mit endständigen Oxirangruppen und nachfolggende Umwandlung wenigstens eines Teiles der endständigen Oxirangruppen des verlängerten Epoxydharzes in kationische Gruppen durch Reaktion des Harzes mit einer nucleophilen Verbindung zur Bildung eines kationischen Platzes in dem Molekül und Zugabe einer organischen Säure und Wasser gleichzeitig mit der oder anschließend an die Zugabe der nucleophilen Verbindung, wodurch das verlängerte, kationische Epoxydharz eine Ladungsdichte von 0,2 bis 0,6 Milliäquivalent an kationischer Ladung pro g an Harz hat, und das verlängerte Epoxydharz hergestellt wurde durch Umsetzung in Anwesenheit eines geeigneten Katalysators von:

(A) 60 bis 90 Gew.-% Glycidylethern, umfassend:

(A-1) wenigstens einen Glycidylether eines Diols, der ein Glycidylether eines Polyetherdiols ist, einen Diglycidylether eines aliphatischen Diols, das im wesentlichen frei von Ethersauerstoffatomen ist, oder einen Diglycidylether eines oxyalkylierten Diols, und

(A-2) einen Diglycidylether eines zweiwertigen Phenols,

mit

(B) 10 bis 40 Gew.-% eines zweiwertigen Phenols, und wahlweise

(C) einem monofunktionellen Kappungsmittel,

worin (A-1) und (A-2) in solchen Mengen eingesetzt werden, daß 20 bis 100 Gew.-% der Glycidlether (A) durch die Komponente (A-1) beigesteuert werden und von 0 bis 80 Gew.-% der Glycidylether durch die Komponente (A-2) beigesteuert werden, und die Komponenten (A) und (B) in solchen Mengen eingesetzt werden, daß das erhaltene Epoxidäquivalentgewicht von 350 bis 10.000 beträgt,

und

II. 90 bis 10 Gew.-% eines unterschiedlichen Harzes auf Epoxydbasis für kathodische Elektroabscheidung, mit der Maßgabe, daß:

Harz II keine verlängerte, kationische Epoxydharzzusammensetzung ist, die durch Bildung eines verlängerten Epoxydharzes, das endständige Oxirangruppen trägt, und nachträglich durch Umwandlung wenigstens eines Teiles der endständigen Oxirangruppen des verlängerten Epoxydharzes in kationische Gruppen durch Reaktion des Harzes mit einer nucleophilen Verbindung zur Bildung eines kationischen Platzes in dem Molekül und Zugabe einer organischen Säure und Wasser gleichzeitig mit der oder anschließend an die Zugabe der nucleophilen Verbindung hergestellt wurde, wodurch das verlängerte, kationische Epoxydharz eine Ladungsdichte von 0,2 bis 0,6 Milliäquivalent pro g an Harz hat, und bei welchem das verlängerte Epoxydharz durch Umsetzung in Anwesenheit eines geeigneten Katalysators von:

60 bis 90 Gew.-% Glycidylethern (A), umfassend:

(A-1) wenigstens einen Glycidylether eines Diols, der ein Diglycidylether eines Polyetherdiols ist, einen Diglycidylether eines aliphatischen Diols, das im wesentlichen frei von Ethersauerstoffatomen ist, oder einen Diglycidylether eines oxyalkylierten Diols, und

(A-2) einen Diglycidylether eines zweiwertigen Phenols,

mit

40 bis 10 Gew.-% eines zweiwertigen Phenols (B), worin (A-1) und (A-2) in solchen Mengen eingesetzt werden, daß 10 bis 75 Gew.-% der Glycidylether (A) durch die Komponente (A-1) beigesteuert werden und von 25 bis 90 Gew.-% der Glycidylether durch die Komponente (A-2) beigesteuert werden, und die Komponenten (A) und (B) in solchen Mengen eingesetzt werden, daß das erhaltene Epoxidäquivalentgewicht von 350 bis 10.000 beträgt, hergestellt wurde.

**2.** Mischung nach Anspruch 1, in welcher

(a) der Diglycidylether eines Diols die Formel Strukturfomel besitzt:

(III)

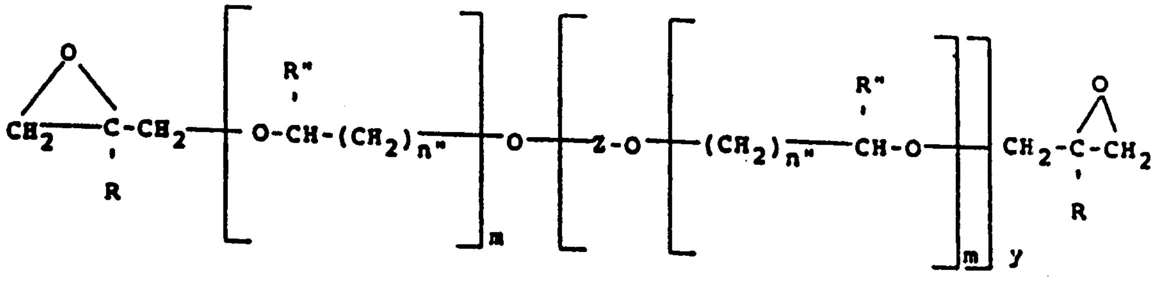

worin jedes R unabhängig voneinander Wasserstoff oder eine Hydrocarbylgruppe mit 1 bis 3 Kohlenstoffatomen ist; jedes R" Wasserstoff oder eine Alkylgruppe mit 1 bis 6 Kohlenstoffatomen ist; m eine ganze Zahl von 0 bis 50 ist; n" einen Wert von 1 bis 3 besitzt; y = 0 oder 1 ist; und Z eine zweiwertige, aliphatische oder cycloaliphatische Gruppe mit 2 bis 20 Kohlenstoffatomen oder eine durch die folgenden Formeln wiedergebene Gruppe ist:

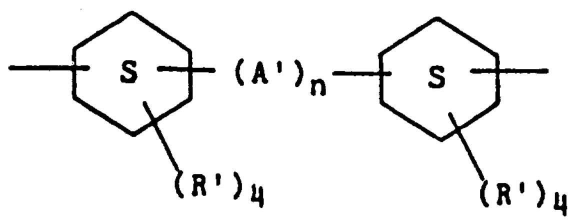
,

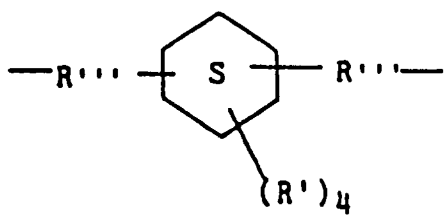
,

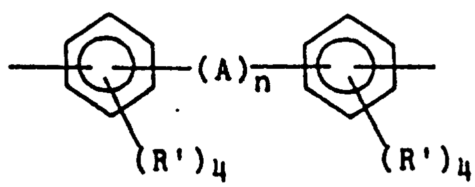
,

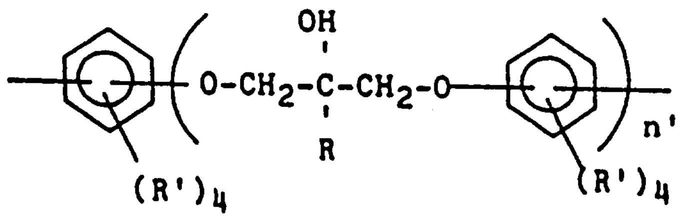

,

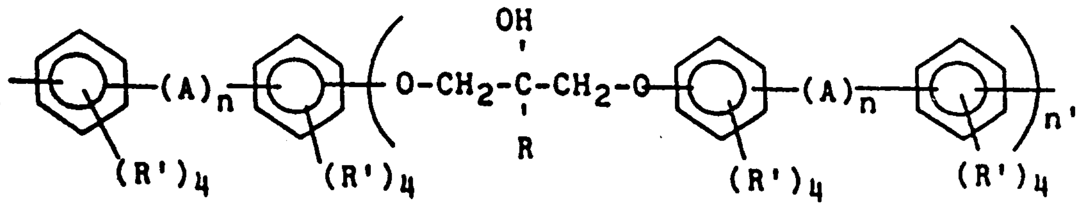

oder

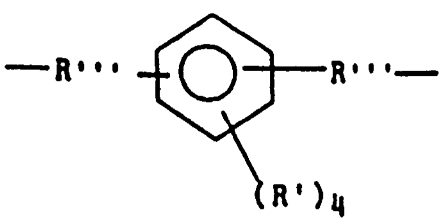

worin R und R" die zuvor angegebene Bedeutung haben; A' oder R"' zweiwertige Kohlenwasserstoffgruppen mit von 1 bis 6 Kohlenstoffatomen sind; A eine zweiwertige Kohlenwasserstoffgruppe mit 1 bis 12 Kohlenstoffatomen,

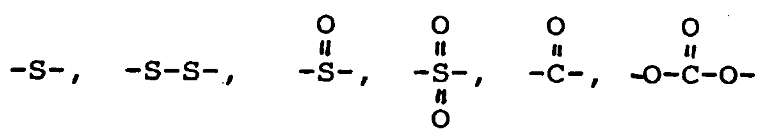 oder -O- ist;

jedes R' unabhängig voneinander Wasserstoff, eine Hydrocarbyl- oder Hydrocarbyloxygruppe mit 1 bis 4 Kohlenstoffatomen oder ein Halogen ist; n einen Wert von 0 bis 1 hat; und n' einen Wert von 0 bis 10 hat,
und
(b) die Komponente (A-2) ein Diglycidylether eines durch die folgenden Formeln I oder II wiedergegebenen zweiwertigen Phenols ist:

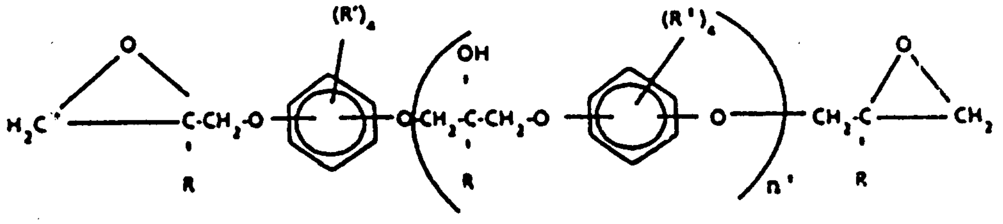

(I)

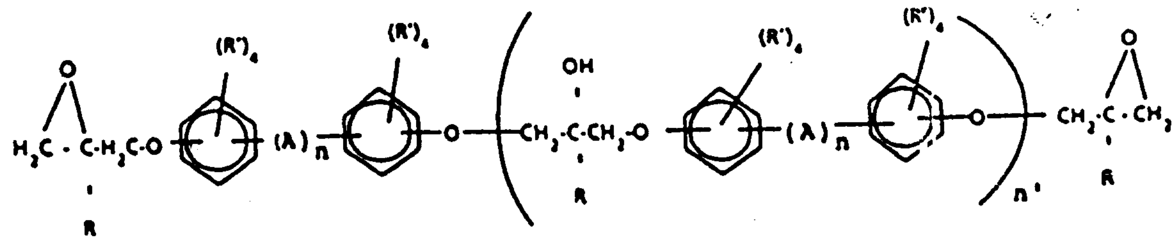

(II)

worin jedes A unabhängig voneinander eine zweiwertige Kohlenwasserstoffgruppe mit 1 bis 12 Kohlenstoffatomen, -S-, -S-S-, -SO-, $-SO_2-$, -CO-, -O-CO-O- oder -O- ist; jedes R unabhängig voneinander Wasserstoff oder eine Hydrocarbylgruppe mit 1 bis 3 Kohlenstoffatomen ist; jedes R' unabhängig voneinander Wasserstoff, eine Hydrocarbyl- oder Hydrocarbyloxygruppe mit 1 bis 4 Kohlenstoffatomen oder ein Halogen ist; n einen Wert von 0 bis 1 hat; und n' einen Wert von 0 bis 10 hat.

**3.** Mischung nach Anspruch 2, in welcher der Diglycidylether des Diols der Diglycidylether eines Polyetherdiols der folgenden Strukturformel ist:

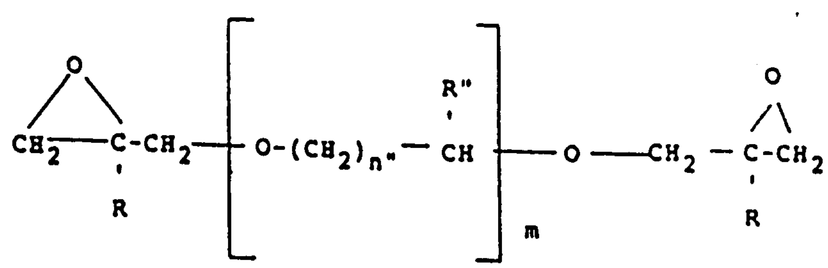

V

worin m eine ganze Zahl von 2 bis 50 ist; und R, R" und n" die in Anspruch 2 angegebene Bedeutung besitzen.

**4.** Mischung nach Anspruch 2, in welcher der Diglycidylether des Diols der Diglycidylether eines aliphatischen, im wesentlichen von Ethersauerstoffatomen freien Diols ist, das die Strukturformel besitzt:

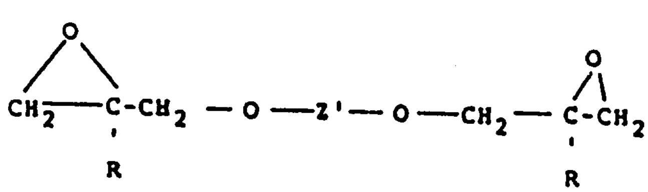

VII

worin Z' eine zweiwertige, aliphatische oder cycloaliphatische Gruppe mit 2 bis 20 Kohlenstoffatomen

oder eine der durch die folgenden Strukturformeln wiedergegebenen Gruppen ist:

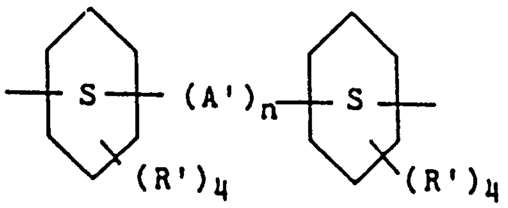

oder

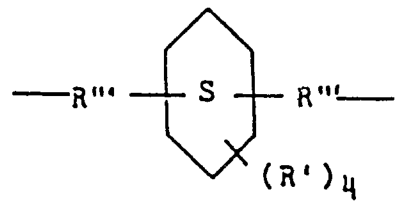

jedes R' unabhängig voneinander Wasserstoff oder eine Hydrocarbylgruppe mit 1 bis 4 Kohlenstoffatomen ist; und jedes R, A' oder R"' und n die in Anspruch 2 angegebene Bedeutung besitzen.

**5.** Mischung nach Anspruch 2, in welcher der Diglycidylether des Diols der Diglycidylether eines oxyalkylierten Diols der folgenden Strukturformel ist:

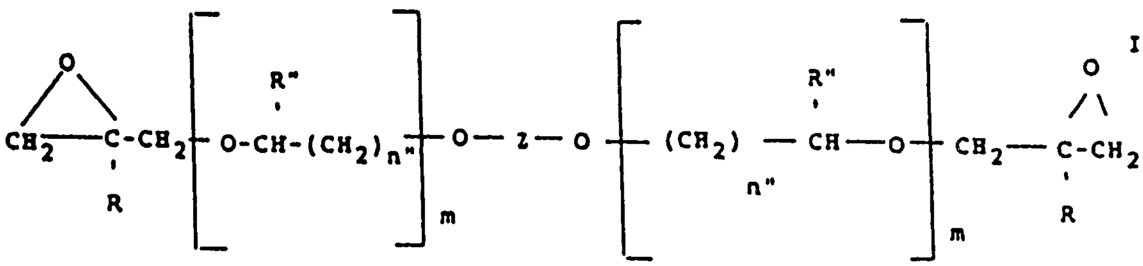

IX

worin m eine ganze Zahl von 1 bis 25 ist; und R, R', R", R"', A, A', Z, n, n' und n" die in Anspruch 2 angegebene Bedeutung besitzen.

**6.** Mischung nach Anspruch 2, in welcher die Komponente A-2 ein durch die Formel II wiedergegebenes Epoxydharz ist, worin jedes R Wasserstoff ist, A eine Isopropropylidengruppe ist und n' 0,1-5 ist und n = 1 ist.

**7.** Verfahren zur Herstellung einer Epoxydharzzusammensetzung mit endständigen Oxirangruppen, welches die Stufen der Umwandlung von Oxirangruppen in kationische Gruppen durch Reaktion einer nucleophilen Verbindung mit wenigstens einigen der Oxirangruppen der Epoxydharzzusammensetzung, wobei eine organische Säure und Wasser während eines Teiles dieser Umwandlung zugesetzt werden, umfaßt, gekennzeichnet durch die Verwendung von zwei kationischen Epoxydharzen, wie in Anspruch 1 definiert, als Epoxydharzzusammensetzung.

**8.** Verfahren nach Ansdpruch 7, worin die Umwandlung der Harze in kationische Harze erfolgt, nachdem die unterschiedlichen Epoxydharze vermischt sind.

**9.** Verfahren nach Anspruch 7, worin die Harze vermischt werden, nachdem jedes Harz in ein kationisches Harz umgewandelt worden ist.

**10.** Verfahren nach Anspruch 7, worin die Harze in Form von stabilen Öl-in-Wasser-Dispersionen vorliegen, wenn das Mischen durchgeführt wird.

**11.** Verfahren nach Anspruch 7, worin der Diglycidylether eines Diols die Strukturformel besitzt:

(III)

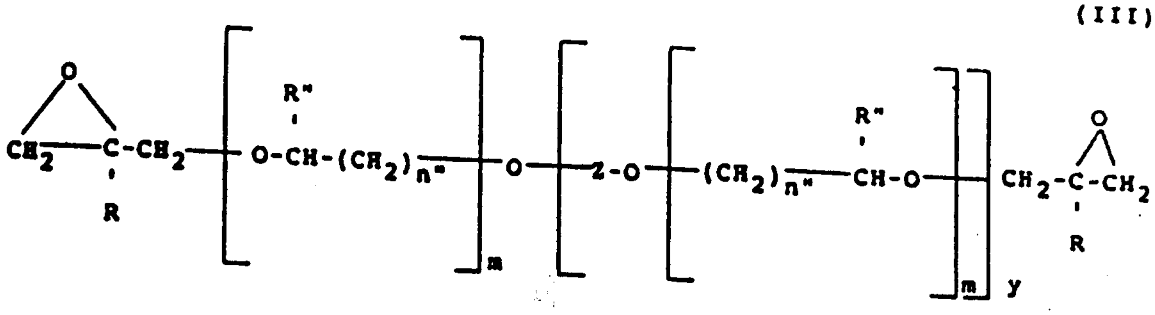

worin jedes R unabhängig voneinander Wasserstoff oder eine Hydrocarbylgruppe mit 1 bis 3 Kohlenstoffatomen ist; jedes R" Wasserstoff oder eine Alkylgruppe mit 1 bis 6 Kohlenstoffatomen ist; m eine ganze Zahl von 0 bis 50 ist; n" einen Wert von 1 bis 3 besitzt; y = 0 oder 1 ist; und Z eine zweiwertige, aliphatische oder cycloaliphatische Gruppe mit 2 bis 20 Kohlenstoffatomen oder eine durch die folgenden Formeln wiedergebene Gruppe ist:

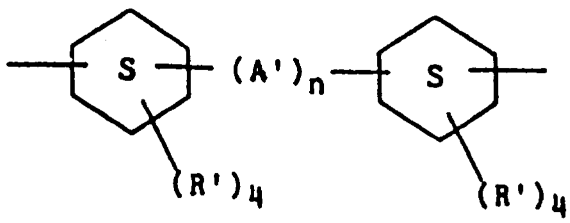

,

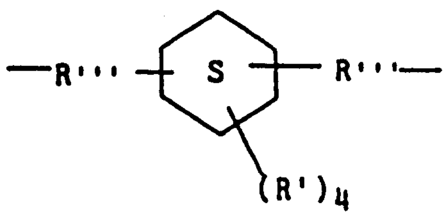

,

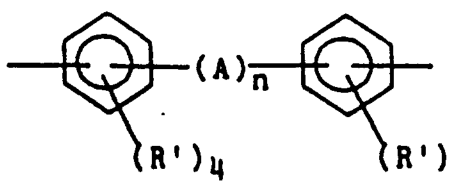

,

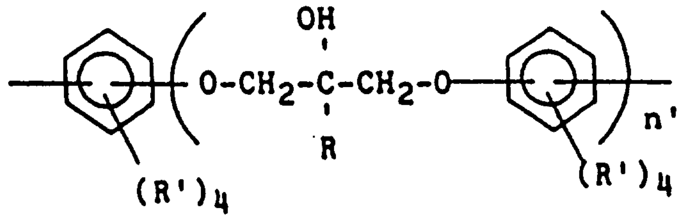

,

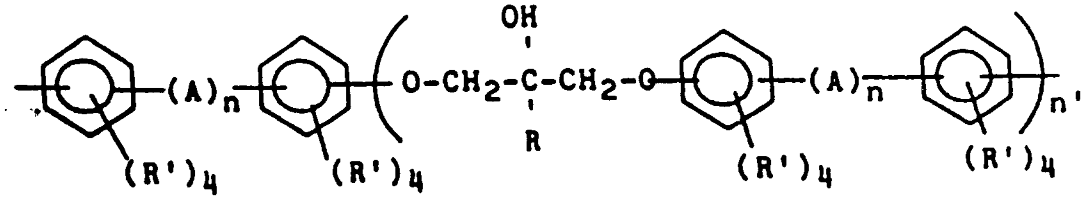

oder

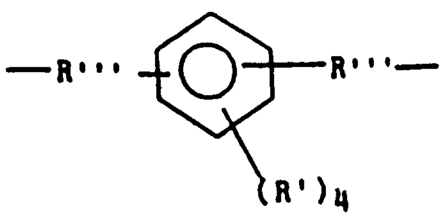

worin R und R" zu zuvor angegebene Bedeutung haben und A' oder R"' eine zweiwertige Kohlenwasserstoffgruppe mit 1 bis 6 Kohlenstoffatomen ist; A eine zweiwertige Kohlenwasserstoffgruppe mit 1 bis 12 Kohlenstoffatomen,

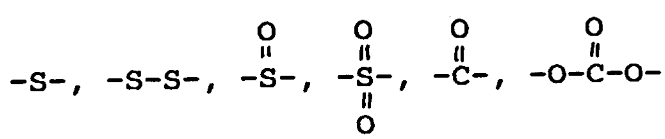
oder -O- ist;

jedes R' unabhängig voneinander Wasserstoff, eine Hydrocarbyl- oder Hydrocarbyloxygruppe mit 1 bis 4 Kohlenstoffatomen oder ein Halogen ist; n einen Wert von 0 bis 1 hat; und n' einen Wert von 0 bis 10 hat.

**12.** Verfahren nach Anspruch 11, worin der Diglycidylether des Diols der Diglycidylether eines Polyetherdiols mit der Strukturformel ist:

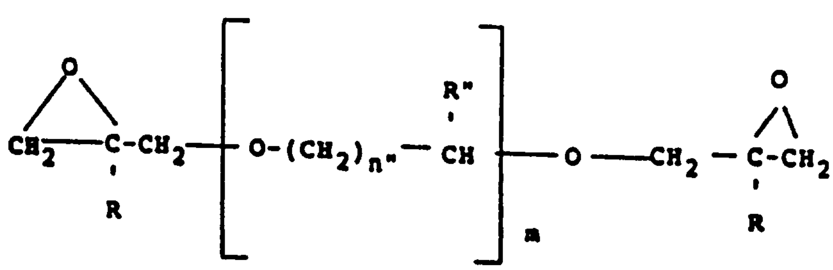
V

worin m eine ganze Zahl von 2 bis 50 ist und R, R" und n" die in Anspruch 11 angebene Bedeutung haben.

13. Verfahren nach Anspruch 11, worin der Diglycidylether des Diols der Diglycidylether eines aliphatischen, im wesentlichen von Ethersauerstoffatomen freien Diols mit der Strukturformel ist:

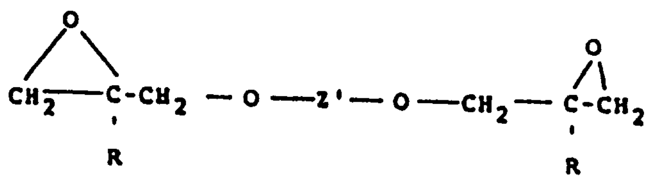

VII

worin Z' eine zweiwertige, aliphatische oder cycloaliphatische Gruppe mit 2 bis 20 Kohlenstoffatomen oder eine der durch die folgenden Strukturformeln wiedergegebenen Gruppen ist:

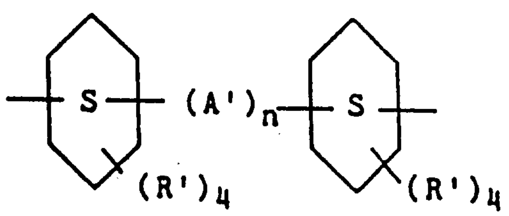

oder

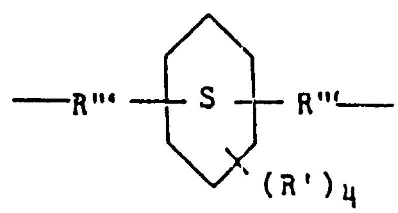

jedes R' unabhängig voneinander Wasserstoff oder eine Hydrocarbylgruppe mit 1 bis 4 Kohlenstoffatomen ist; und jedes R, A', R"' und n die in Anspruch 11 angegebene Bedeutung besitzen.

14. Verfahren nach Anspruch 11, worin der Diglycidylether des Diols der Diglycidylether eines oxyalkylierten Diols mit der Strukturformel ist:

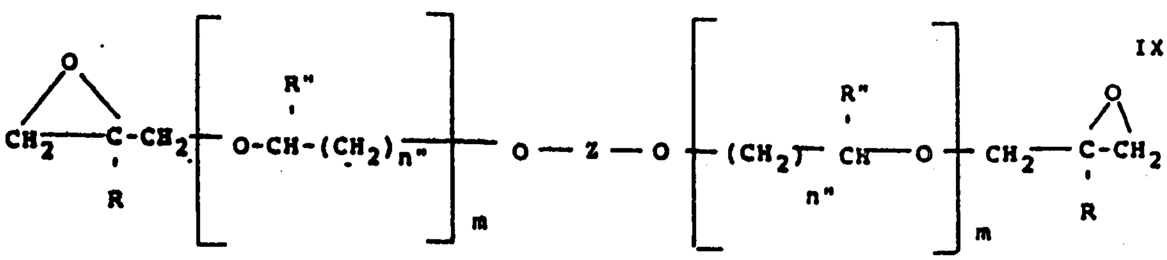

IX

worin m eine ganze Zahl von 1 bis 25 ist und R, R', R", R"', A, A', Z, n, n' und n" die in Anspruch 11 angegebene Bedeutung besitzen.

15. Verfahren nach einem der Ansprüche 7 bis 14, worin der Diglycidylether eines zweiwertigen Phenols die Strukturformel besitzt:

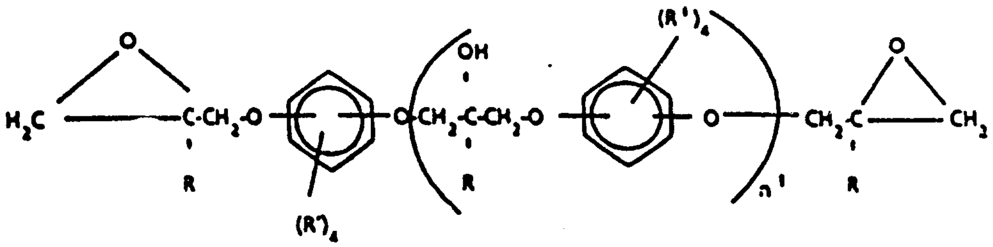

(I)

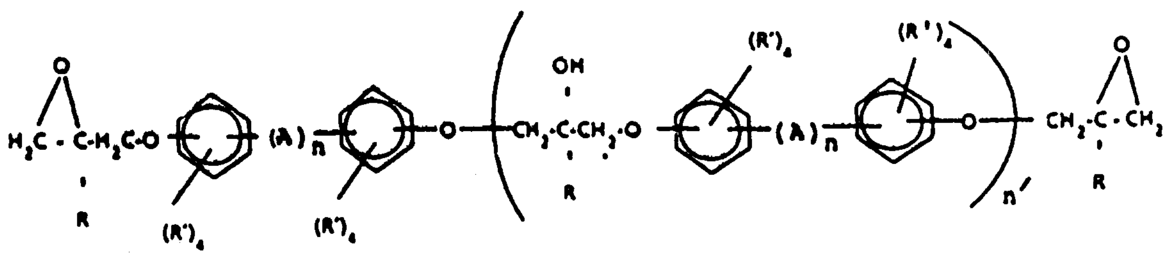

(II)

worin A eine zweiwertige Kohlenwasserstoffgruppe mit 1 bis 12 Kohlenstoffatomen,

$$-S-,\ -S-S-,\ -\overset{O}{\overset{\|}{S}}-,\ -\underset{\underset{O}{\|}}{\overset{O}{\overset{\|}{S}}}-,\ -\overset{O}{\overset{\|}{C}}-,\ -O-\overset{O}{\overset{\|}{C}}-O-\ \text{oder}\ -O-\ \text{ist;}$$

jedes R' unabhängig voneinander Wasserstoff, eine Hydrocarbyl- oder Hydrocarbyloxygruppe mit 1 bis 4 Kohlenstoffatomen oder ein Halogen ist; jedes R unabhängig voneinander Wasserstoff oder ein Hydrocarbylgruppe mit 1 bis 3 Kohlenstoffatomen ist; n einen Wert von 0 bis 1 hat; und n' einen Wert von 0 bis 10 hat.

**16.** Beschichtungszusammensetzung, die zur Elektroabscheidung geeignet ist, umfassend eine wässrige Dispersion der Mischung von Anspruch 1 in Kombination mit einem Aushärtmittel, ausgewählt aus einem geblockten Polyisocyanat, einem Aminaldehydharz, einem Phenolaldehydharz und einem Polyesterharz.

**17.** Beschichtungszusammensetzung nach Anspruch 16, welche ebenfalls ein Pigment enthält.

**18.** Verwendung eines verlängerten, kationischen Epoxydharzes nach Anspruch 1 oder 2 in Beschichtungszusammensetzungen für die Elektroabscheidung.

## Revendications

**1.** Mélange de deux résines époxy cationiques, comprenant :

I. de 10 à 90 % en poids d'une résine époxy cationique à chaîne allongée, que l'on prépare en formant une résine époxy à chaîne allongée comportant des groupes oxirane terminaux, en convertissant ensuite au moins une partie de ces groupes oxirane terminaux de la résine époxy à chaîne allongée en des groupes cationiques en faisant réagir la résine avec un composé nucléophile pour former un site cationique dans la molécule, et en ajoutant un acide organique et de l'eau, en même temps que le nucléophile ou après celui-ci, cette résine époxy cationique à chaîne allongée présentant une densité de charge de 0,2 à 0,6 milliéquivalent de charge cationique par gramme de résine, et la résine époxy à chaîne allongée étant préparée par réaction, en présence d'un catalyseur convenable,

(A) de 60 à 90 % en poids d'éthers glycidyliques comprenant :

(A-1)au moins un éther diglycidylique de diol, qui est un éther diglycidylique d'un polyétherdiol, un éther diglycidylique d'un diol aliphatique ne comportant pratiquement pas d'atomes d'oxygène en fonction éther, ou un éther diglycidylique d'un diol oxyalkylé, et
(A-2)un éther diglycidylique d'un diphénol,

avec
(B) de 10 à 40 % en poids d'un diphénol, et éventuellement
(C) un agent monofonctionnel de coiffage,
(A-1) et (A-2) étant utilisés en des quantités telles que de 20 à 100 % en poids des éthers glycidyliques (A) sont apportés par le composant (A-1) et de 0 à 80 % en poids des éthers glycidyliques sont apportés par le composant (A-2), et les composants (A) et (B) étant utilisés en des quantités telles que le poids d'équivalent époxyde de la résine obtenue vaut de 350 à 10 000,

et
II. de 90 à 10 % en poids d'une résine époxy différente pour dépôt cathodique, à condition que cette résine II ne soit pas une composition de résine époxy cationique à chaîne allongée, que l'on prépare en formant une résine époxy à chaîne allongée comportant des groupes oxirane terminaux, en convertissant ensuite au moins une partie de ces groupes oxirane terminaux de la résine époxy à chaîne allongée en des groupes cationiques en faisant réagir la résine avec un composé nucléophile pour former un site cationique dans la molécule, et en ajoutant un acide organique et de l'eau, en même temps que le nucléophile ou après celui-ci, la composition de résine époxy cationique à chaîne allongée présentant une densité de charge de 0,2 à 0,6 milliéquivalent de charge cationique par gramme de résine, et la résine époxy à chaîne allongée étant préparée par réaction, en présence d'un catalyseur convenable,
de 60 à 90 % en poids d'éthers glycidyliques (A) comprenant :

(A-1)au moins un éther diglycidylique de diol, qui est un éther diglycidylique d'un polyétherdiol, un éther diglycidylique d'un diol aliphatique ne comportant pratiquement pas d'atomes d'oxygène en fonction éther, ou un éther diglycidylique d'un diol oxyalkylé, et
(A-2)un éther diglycidylique d'un diphénol,

avec
de 40 à 10 % en poids d'un diphénol (B),
(A-1) et (A-2) étant utilisés en des quantités telles que de 10 à 75 % en poids des éthers glycidyliques (A) sont apportés par le composant (A-1) et de 25 à 90 % en poids des éthers glycidyliques sont apportés par le composant (A-2), et les composants (A) et (B) étant utilisés en des quantités telles que le poids d'équivalent époxyde de la résine obtenue vaut de 350 à 10 000.

**2.** Mélange conforme à la revendication 1, dans lequel
(a) l'éther diglycidylique de diol présente la formule structurale

(III)

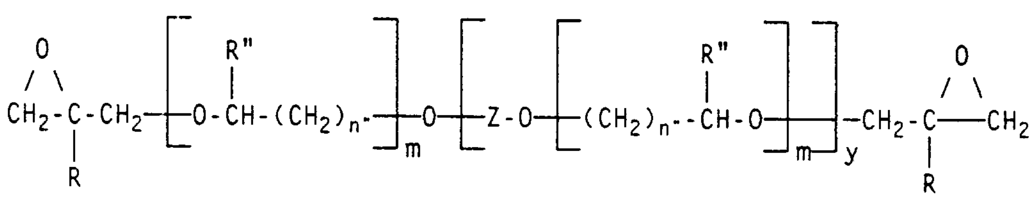

dans laquelle chaque R représente indépendamment un atome d'hydrogène ou un groupe hydrocarboné comportant de 1 à 3 atomes de carbone, chaque R" représente un atome d'hydrogène ou un groupe alkyle comportant de 1 à 6 atomes de carbone, m est un nombre entier valant de 0 à 50, n" vaut de 1 à 3, y vaut 0 ou 1, et Z représente un groupe aliphatique ou cycloaliphatique divalent, comportant de 2 à 20 atomes de carbone, ou l'un des groupes représentés par les formules suivantes :

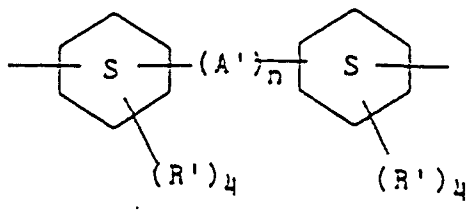

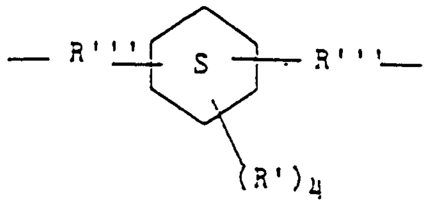

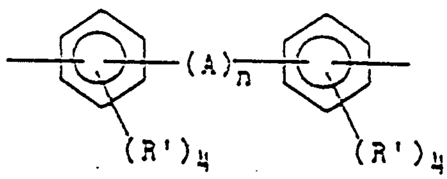

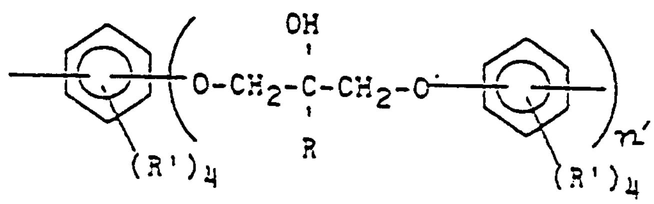

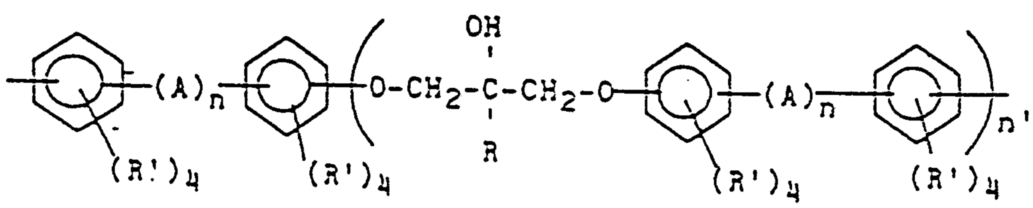

or

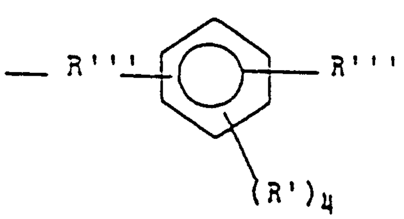

dans lesquelles R et R" sont tels que définis ci-dessus et A' ou R"' représentent un groupe hydrocarboné divalent comportant de 1 à 6 atomes de carbone, A représente un groupe hydrocarboné divalent comportant de 1 à 12 atomes de carbone, -S-, -S-S-, $-SO_2$, -SO-, -CO-, -O-CO-O- ou -O-, chaque R' représente indépendamment un atome d'hydrogène, un groupe hydrocarboné ou hydrocarboné-oxy comportant de 1 à 4 atomes de carbone, ou un atome d'halogène, n vaut de 0 à 1, et n' vaut de 0 à 10,

et

b) le composant (A-2) est un éther diglycidylique de diphénol, représenté par l'une des formules suivantes I et II

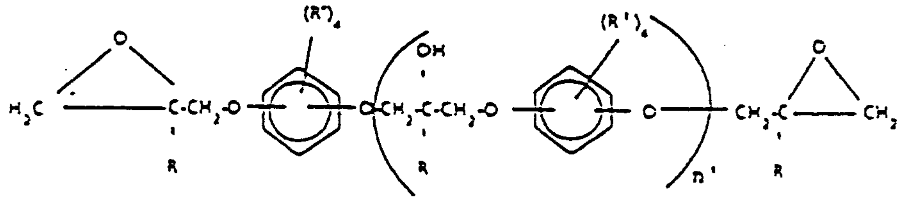

(I)

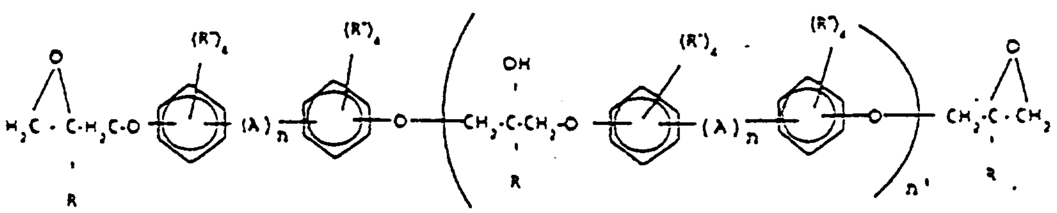

(II)

dans lesquelles chaque A représente indépendamment un groupe hydrocarboné divalent comportant de 1 à 12 atomes de carbone, -S-, -S-S-, -SO-, $-SO_2-$, -CO-, -O-CO-O- ou -O-, chaque R représente indépendamment un atome d'hydrogène ou un groupe hydrocarboné comportant de 1 à 3 atomes de carbone, chaque R' représente indépendamment un atome d'hydrogène, un groupe hydrocarboné ou hydrocarboné-oxy comportant de 1 à 4 atomes de carbone, ou un atome d'halogène, n vaut de 0 à 1 et n' vaut de 0 à 10.

3. Mélange conforme à la revendication 2, dans lequel l'éther diglycidylique de diol est un éther diglycidylique de polyétherdiol présentant la formule structurale

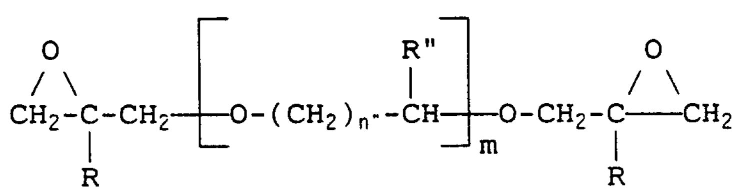

(V)

dans laquelle m représente un nombre entier valant de 2 à 50 et R, R" et n" sont définis comme dans la revendication 2.

4. Mélange conforme à la revendication 2, dans lequel l'éther diglycidylique de diol est un éther diglycidylique d'un diol aliphatique ne comportant pratiquement pas d'atomes d'oxygène en fonction éther, présentant la formule structurale

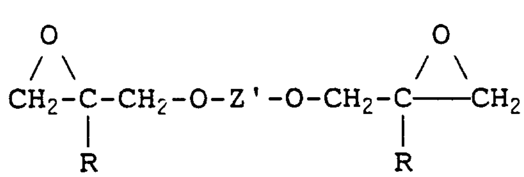

(VII)

dans laquelle Z' représente un groupe aliphatique ou cycloaliphatique divalent comportant de 2 à 20 atomes de carbone, ou l'un des groupes représentés par les formules structurales

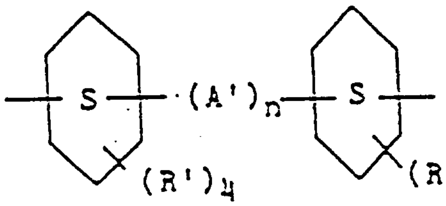 et 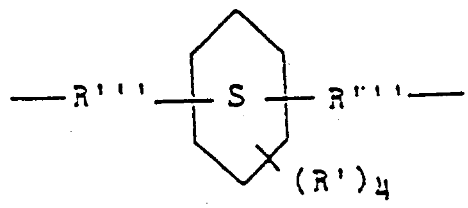

dans lesquelles chaque R' représente indépendamment un atome d'hydrogène ou un groupe hydrocarboné comportant de 1 à 4 atomes de carbone, et chacun des R, A', R''' et n est défini comme dans la revendication 2.

**5.** Mélange conforme à la revendication 2, dans lequel l'éther diglycidylique de diol est un éther diglycidylique de diol oxyalkylé présentant la formule structurale

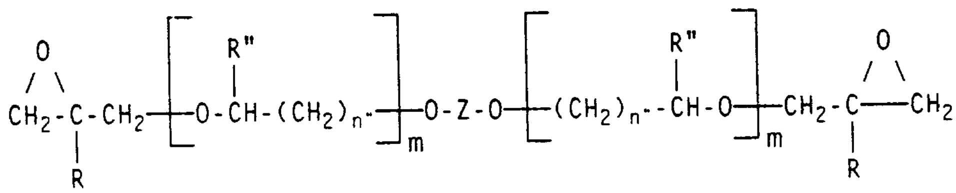 (IX)

dans laquelle m représente un nombre entier valant de 1 à 25 et R, R', R'', R''', A, A', Z, n, n' et n'' sont définis comme dans la revendication 2.

**6.** Mélange conforme à la revendication 2, dans lequel le composant A-2 est une résine époxy représentée par la formule II dans laquelle chaque R représente un atome d'hydrogène, A représente un groupe isopropylidène, n' vaut de 0,1 à 5 et n vaut 1.

**7.** Procédé de préparation d'une résine époxy cationique à chaîne allongée à partir d'une composition de résine époxy comportant des groupes oxirane terminaux, lequel procédé comporte l'étape de conversion des groupes oxirane en des groupes cationiques par réaction d'un composé nucléophile avec au moins certains des groupes oxirane de la composition de résine époxy, un acide organique et de l'eau étant ajoutés à un certain moment au cours de cette conversion, procédé caractérisé en ce que l'on utilise, en tant que composition de résine époxy, un mélange de deux résines époxy cationiques, défini comme dans la revendication 1.

**8.** Procédé conforme à la revendication 7, dans lequel la conversion des résines en résines cationiques a lieu après le mélange des différentes résines époxy.

**9.** Procédé conforme à la revendication 7, dans lequel les résines sont mélangées après la conversion de chacune des résines en une résine cationique.

**10.** Procédé conforme à la revendication 7, dans lequel les résines se présentent sous la forme de dispersions aqueuses stables huile-dans-eau, lorsque l'on effectue le mélange.

**11.** Procédé conforme à la revendication 7, dans lequel l'éther diglycidylique de diol présente la formule structurale

(III)

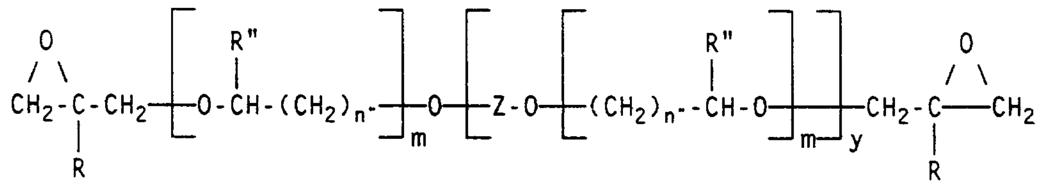

dans laquelle chaque R représente indépendamment un atome d'hydrogène ou un groupe hydrocarboné comportant de 1 à 3 atomes de carbone, chaque R" représente un atome d'hydrogène ou un groupe alkyle comportant de 1 à 6 atomes de carbone, m est un nombre entier valant de 0 à 50, n" vaut de 1 à 3, y vaut 0 ou 1, et Z représente un groupe aliphatique ou cycloaliphatique divalent, comportant de 2 à 20 atomes de carbone, ou l'un des groupes représentés par les formules suivantes :

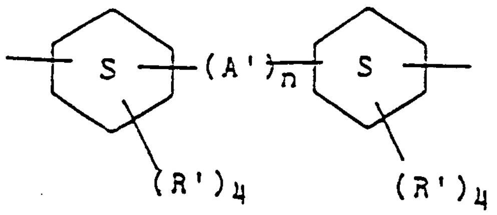

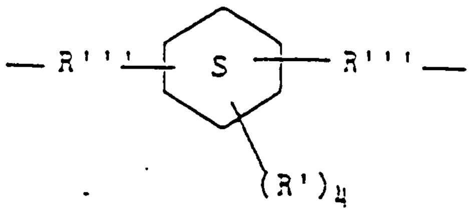

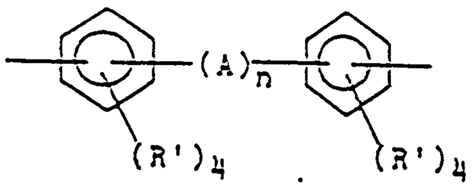

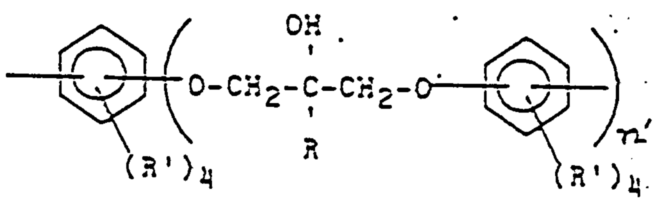

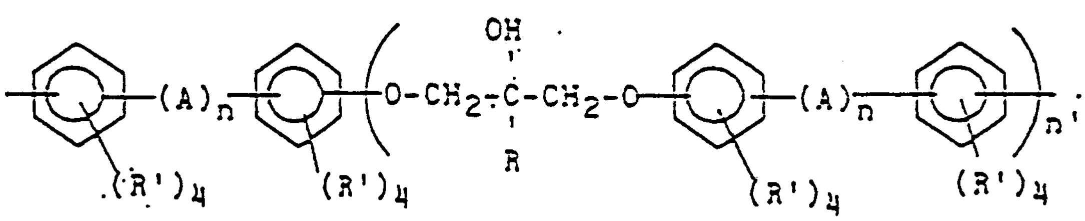

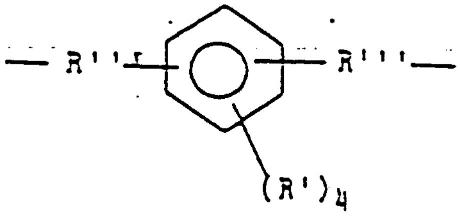

dans lesquelles R et R" sont tels que définis ci-dessus et A' ou R''' représentent un groupe hydrocarboné divalent comportant de 1 à 6 atomes de carbone, A représente un groupe hydrocarboné divalent comportant de 1 à 12 atomes de carbone, -S-, -S-S-, $-SO_2-$, -SO-, -CO-, -O-CO-O- ou -O-, chaque R' représente indépendamment un atome d'hydrogène, un groupe hydrocarboné ou hydrocarboné-oxy comportant de 1 à 4 atomes de carbone, ou un atome d'halogène, n vaut de 0 à 1, et n' vaut de 0 à 10,

**12.** Procédé conforme à la revendication 11, dans lequel l'éther diglycidylique de diol est un éther diglycidylique de polyétherdiol présentant la formule structurale

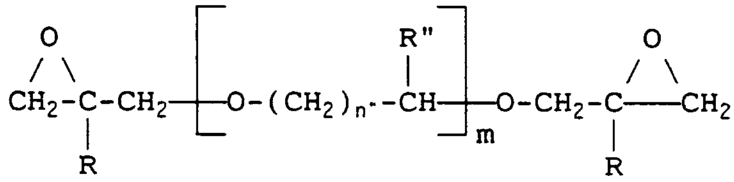

(V)

dans laquelle m représente un nombre entier valant de 2 à 50 et R, R" et n" sont définis comme dans la revendication 11.

**13.** Procédé conforme à la revendication 11, dans lequel l'éther diglycidylique de diol est un éther diglycidylique de diol aliphatique ne comportant pratiquement pas d'atomes d'oxygène en fonction éther, présentant la formule structurale

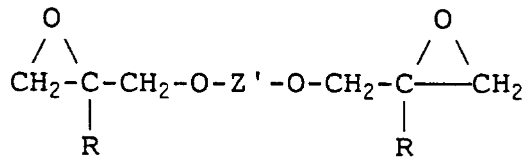

(VII)

dans laquelle Z' représente un groupe aliphatique ou cycloaliphatique divalent comportant de 2 à 20 atomes de carbone, ou l'un des groupes représentés par les formules structurales

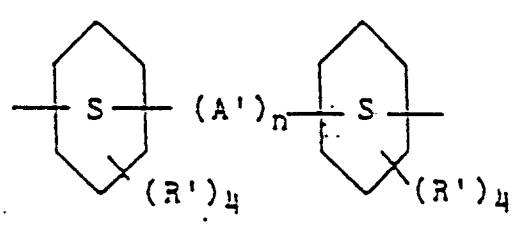

et

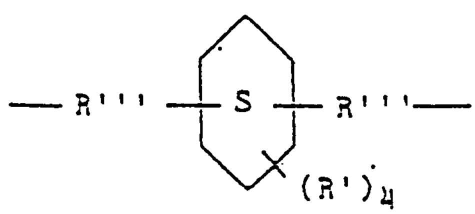

dans lesquelles chaque R' représente indépendamment un atome d'hydrogène ou un groupe hydrocarboné comportant de 1 à 4 atomes de carbone, et chacun des R, A', R"' et n est défini comme dans la revendication 11.

**14.** Procédé conforme à la revendication 11, dans lequel l'éther diglycidylique de diol est un éther diglycidylique de diol oxyalkylé présentant la formule structurale

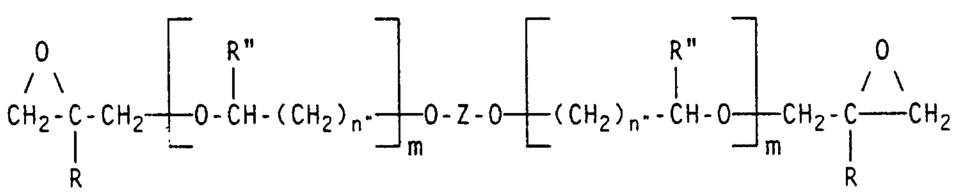

(IX)

dans laquelle m représente un nombre entier valant de 1 à 25 et R, R', R", R"', A, A', Z, n, n' et n" sont définis comme dans la revendication 11.

**15.** Procédé conforme à l'une quelconque des revendications 7 à 14, dans lequel l'éther diglycidylique de diphénol présente la formule structurale

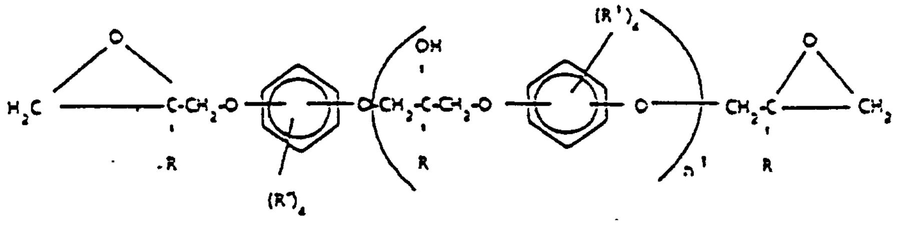

(I)

ou

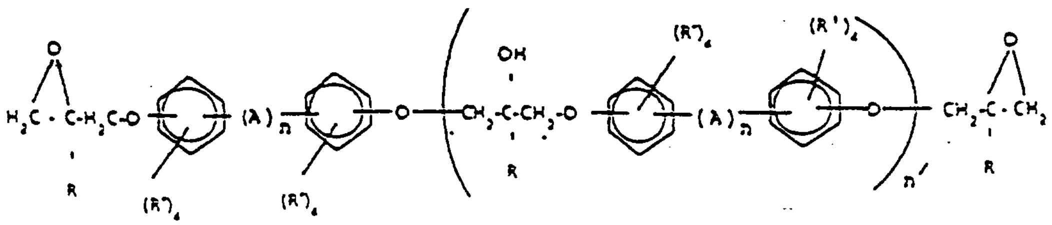

(II)

dans lesquelles A représente un groupe hydrocarboné divalent comportant de 1 à 12 atomes de carbone, -S-, -S-S-, -SO-, $-SO_2-$, -CO-, -O-CO-O- ou -O-, chaque R' représente indépendamment un atome d'hydrogène, un groupe hydrocarboné ou hydrocarboné-oxy comportant de 1 à 4 atomes de carbone, ou un atome d'halogène, chaque R représente indépendamment un atome d'hydrogène ou un groupe hydrocarboné comportant de 1 à 3 atomes de carbone, n vaut de 0 à 1 et n' vaut de 0 à 10.

**16.** Composition de revêtement, appropriée pour un dépôt par électrolyse et comprenant une dispersion aqueuse du mélange de la revendication 1, en combinaison avec un agent durcisseur choisi parmi un polyisocyanate bloqué, une résine amine-aldéhyde, une résine phénol-aldéhyde, et une résine polyester.

**17.** Composition de revêtement conforme à la revendication 16, qui contient également un pigment.

**18.** Utilisation d'une résine époxy cationique à chaîne allongée, conforme à la revendication 1 ou 2, dans des compositions de revêtement par dépôt électrolytique.